# EUROPEAN PATENT SPECIFICATION

(11) **EP 1 855 879 B1**
(45) Date of publication and mention of the grant of the patent: **12.05.2010**
(21) Application number: 06720983.3
(22) Date of filing: 22.02.2006
(51) Int. Cl.: B32B 27/08, B32B 27/30, B32B 27/32, B65D 75/34, B65D 75/36

(54) **MULTILAYER FILMS INCLUDING CYCLOOLEFIN COPOLYMER AND STYRENE-BUTADIENE COPOLYMER**
CYCLOOLEFINCOPOLYMER UND STYROL-BUTADIEN-COPOLYMER ENTHALTENDE MEHRLAGIGE FOLIEN
FILMS MULTICOUCHES COMPRENANT UN COPOLYMÈRE DE CYCLOOLÉFINE ET UN COPOLYMÈRE DE STYRÈNE-BUTADIÈNE

(30) Priority: 23.02.2005 US 655646 P; 28.10.2005 US 731316 P
(43) Date of publication of application: 21.11.2007
(73) Proprietor: Topas Advanced Polymers, Inc., Florence KY 41042 (US); BASF CORPORATION, Florham Park, NJ 07932 (US)
(72) Inventor: STEWART, Jennifer, Dearborn, Michigan 48124 (US); LEE, S., Scotch Plains, New Jersey 07076 (US); BOST, P., Long Valley, New Jersey 07853 (US); VIOLA, Jeffrey, Manalpan, New Jersey 07726 (US)
(74) Representative: Ackermann, Joachim
(86) International application number: PCT/US2006/006335
(87) International publication number: WO 2006/091694

(56) References cited:
- EP-A- 0 570 188
- EP-A- 0 812 874
- EP-A- 1 468 817
- US-A1- 2003 203 141

## Description

### Technical Field

The present invention relates generally to multilayered films and more specifically to a multilayered film including at least one layer of cyclo-olefin copolymer and a layer of styrene-butadiene copolymer. The film layers may be co-extruded together and melt-bonded to each other without the aid of a tie layer. The multilayered films of the invention exhibit superior peel adhesion, optical properties, and moisture barrier properties. The films thermoform well and are suitable for blister packaging sheet as well as for food packaging, medical barrier and general purpose barrier films.

### Background

Various films have been used with packages as dust and/or moisture barriers. More specifically, films have been investigated for use with pharmaceutical packages to form blisters to seal a pharmaceutical product within the pharmaceutical packages. Conventional films for use with pharmaceutical packages typically include polymers that are formed from halogenated molecules such as polyvinyl chloride (PVC), polyvinylidene chloride (PvDC), and/or fluoropolymers. Although effective as dust and/or moisture barriers, the films formed from such halogenated molecules create environmental hazards upon manufacture. Upon manufacture or disposal of these films, some of the halogenated molecules are released into the environment in a gaseous form and contribute to environmental pollution.

Typically, the films that are used solely as dust barriers include a monolayer sheet including only PVC. These films typically do not include any additional polymer layers due to increased production costs that accompany the use of the additional polymers. These films also cannot be used as effective moisture barriers because PVC permits high levels of moisture to penetrate the film. Therefore, PVC is unsuitable for use alone in applications which require moisture protection, such as for some pharmaceutical applications.

Successful attempts have been made to overcome issues of moisture protection in films. These attempts include use of halogens and fluoropolymers in films that also include PVC and PvDC. The halogens and fluoropolymers typically include fluorine and polychlorotrifluoroethylene. Use of the halogens and fluoropolymers allows the films to provide adequate moisture protection and to be used as moisture barriers. However, like the films that include only PVC, use of the halogens and fluoropolymers is also associated with environmental pollution. Therefore, use of films including halogens and fluoropolymers is also not preferred.

A film including fluoropolymers that is representative of a film that is an effective moisture barrier is specifically disclosed in U.S. Patent Application Publication No. 2003/0203141 to Blum *et al.* The '141 publication uses a film including a first adhesive layer including a styrene butadiene copolymer, a base, an outermost layer including cyclic olefin copolymers, and a fluoropolymer in an outer layer of the film. The '141 publication does not use the styrene butadiene copolymer in the outermost layer of the film. Rather, the '141 publication uses a fluoropolymer in the outermost layer of the film. As a result, the film used in the '141 publication is associated with environmental concerns that accompany manufacture of the film. The '141 publication also uses the cyclic olefin copolymers in the outer layer of the film. It is known that the cyclic olefin copolymers are subject to degradation if contacted with oils, organic and alkaline solvents, and heat. Because of this degradation, the outer layer of the film of the '141 publication is subject to deterioration and poor performance.

Cyclo-olefin copolymers (referred to as COP or COPs) exhibit excellent transparency and moisture permeation properties, in addition to heat resistance, chemical resistance, solvent resistance, and rigidity. COP, a non-crystalline copolymer, has the further advantage of being amenable to thermoforming. While these properties make COP desirable in packaging applications, thermoformed COP is sometimes susceptible to stress cracking when exposed to alkaline environments, especially when high draw ratios are used to make the thermoformed part. A multilayered film incorporating a COP layer can be seen in United States Patent No. 6,042,906 to Itoh et al. which discloses a plastic container having a COP layer adhered to an olefin resin or an ethylene/vinyl copolymer layer. The COP layer is adhered to the non-cyclic olefin layers with an adhesive resin. In EP 0 812 874 Al a multilayered easily tearable film suitable for blister packs is described comprising a composition consisting of about 60-97 % by weight of polyester and about 3 - 40 % by weight of polyolefin as an essential component. The film has at least three layers, wherein a first layer comprises a polyolefin composition, a second layer is an adhesive layer and the third layer comprises a polyolefin and/or polysterene.

Styrene-butadiene copolymers (sometimes referred to as SBC or SBCs) are similarly well-known in the art and are sometimes used in packaging films. SBCs generally exhibit good processability, mechanical properties and transparency, but exhibit modest barrier properties. SBCs have been employed in packaging film or sheet in combination with other polymers including polyvinyl chloride (PVC), polyvinylidene chloride (PVDC), and polypropylene. United States Patent No. 6,517,950 discloses a multilayer film comprising a styrene-butadiene block copolymer and a homogenous ethylene/alpha-olefin layer. SBC/polypropylene films tend to warp when used in blister packaging. Also, as mentioned above, due to an increasing demand to make halogen-free packaging PVC and PVDC are not generally desirable polymers to include in packaging films.

Multilayer polymer films or laminates are produced for their aggregate properties, typically including "tie" layers of adhesive materials in the case of multilayer polymer films since different polymers usually do not readily adhere to one another. Tie layers add expense and can adversely affect optical properties as well as processability.

Multilayered polymeric films or sheets may be produced by co-extrusion. Co-extrusion is a well known process. United States Patent Nos. 3,479,425; 3,959,431; and 4,406,547 describe co-extrusion processes whereby multilayered plastic films can be formed. Multilayered films are usually co-extruded by passing two or more melt streams of polymers through a die. The materials are fused together into a layered structure and are allowed to cool. Once extruded, plastic films can be shaped into containers by subjecting them to a thermoforming process. The construction of blister packaging or other articles of manufacture by thermoforming processes is well known.

Thermoforming is credited with producing packaging having high durability and integrity. United States Patent Nos. 4,421,721; 4,994,229; 5,106,567; and 6,086,600 describe various thermoforming processes for plastic containers. Generally, a thermoforming process forms plastic containers and packaging structures by heating a sheet of plastic to a desirable forming temperature and shaping the plastic by subjecting it to vacuum or pressure shaping in a mold. Thermoforming is a preferred method of making plastic containers because it is comparatively faster than other techniques and uses less material.

Thermoformed blister packaging commonly contains commercial articles including food products, personal care products, and the like. United States Patent No. 6,489,016 discloses multilayer packaging films of polyolefin. Also disclosing such packaging materials and packages made therefrom are United States Patent Nos. 6,383,582; 5,750,262; 5,783,270; and 5,755,081. The moisture barrier properties of a film is an important characteristic in packaging applications. Moisture transmission through a container may adversely affect the contents, especially in applications where the packaging contains pharmaceuticals, food products, and the like. Optical properties such as haze and transparency are also important in packaging applications. It is desirable that packaging be clear so that the product is viewable by the customer.

Despite the availability of a vast number of materials, there is still a need, particularly in blister packaging applications, for thermoformable sheet which is formed from non-halogenated molecules that is resistant to degradation when contacted with oils, organic and alkaline solvents, and heat, and that has suitable moisture and/or dust barrier properties, clarity, processability and will not stress-crack. It has been unexpectedly found in accordance with the present invention that a multilayered film may be produced by directly melt-bonding a cyclo-olefin copolymer with a styrene-butadiene block copolymer to provide sheet with superior optical properties, interlayer adhesion, durability and processability. It is particularly surprising that the COP and the SBC can be co-extruded together to form a melt-bonded composite film suitable for thermoforming because the two polymers exhibit vastly different viscosities.

### Summary of Invention

There is provided in one aspect of the present invention a multilayer film comprising a styrene-butadiene copolymer layer and a cyclo-olefin copolymer layer which is directly melt-bonded to the styrene-butadiene layer. Typically, the cyclo-olefin layer consists essentially of a cyclo-olefin copolymer and incorporates the residue of a polycyclic olefin or an olefin having a cyclopropene group. Other suitable comonomers include ethylene or propylene. The cyclo-olefin copolymer most preferably includes the residue of norbornene. A preferred cycloolefin copolymer incorporates the residue of norbornene and ethylene, and in especially preferred embodiments the cycloolefin copolymer consists essentially of the residue of norbornene and ethylene. A suitable range of norbonene content is between 10 to 70 mol % and a suitable range of ethylene content is 30 to 90 mol %. Preferably, the range of norbornene content is between 25 to 45 mol % and the ethylene content is preferably between 55 and 75 mol %.

The styrene-butadiene layer may consist essentially of at least 50 wt. % styrene, 5 to 50 wt. % butadiene, and optionally up to 10 % other polymeric components. A preferred styrene-butadiene copolymer consists of the residue of styrene and butadiene. A typical range for styrene content is from 60 to 90 weight percent and a typical range for butadiene content is from 10 to 40 weight percent. More preferably, the styrene content is present in an amount from 70 to 80 weight percent and the butadiene is present in an amount from 20 to 30 weight percent.

In some embodiments, the cyclo-olefin layer is generally at least four times thicker than the styrene-butadiene layer and is preferably at least six times thicker. Anywhere from five to fifteen times thicker may be suitable. One preferred embodiment is wherein the film is a three-layered film where the cyclo-olefin layer is between two styrene-butadiene layers. The first and the third layers are substantially free of the cyclic olefin and the second layer is substantially free of the styrene butadiene copolymer. The styrene-butadiene layers are preferably melt-bonded to the cyclo-olefin layer by means of co-extrusion, but the layers may also be bonded by lamination. In still other embodiments, the cyclo-olefin layer is thinner than the SBC layer. A typical structure might include a layered composite of the structure: 125µm SBC/ 50µm COP layer/125µm SBC to provide suitable packaging properties. In the films of the present invention, the bonded layers of styrene-butadiene and cycloolefin typically exhibit a peel adhesion value of at least 0.88 N/cm (0.5 lbf/in). More preferably, the layers exhibit a peel adhesion of at least 1.75 N/cm (1.0 lbf/in). The films made according to the present invention generally have a correlated haze value of less than 5 % when the film has a thickness of 305µm.

In yet another feature of the present invention, there is provided blister packaging with a thermoformed sheet defining one or more domed receptacle portions, where the blister sheet is thermoformed from a multilayered film which includes a styrene-butadiene layer that is melt bonded to a cyclo-olefin layer. The receptacle portions typically contain tablets, capsules, pills, caplets, or the like which typically comprise pharmaceutical products, medicinal products, vitamins, nutritional supplements, or confections including mints, gum and the like. The blister sheet may also be used in a pharmaceutical package, which includes a base layer, a sealant layer, and a blister sheet.

The film of the present invention can be used in packaging as an effective dust and/or moisture barrier. Using styrene butadiene copolymer in the first and third layers of the film allows the film to be substantially transparent, have superior optical properties, and be impact resistant and durable. Using the styrene butadiene copolymer also allows the film to be efficiently processed, have a pleasing tactile feel, and be thermoformable at low temperatures resulting in a low cost of producing the film. The film provides a 35% film yield advantage compared to competitive halogen-containing films due to a low density of the styrene butadiene copolymer. A higher quantity of the film of the subject invention can be purchased at the same weight as a comparative film because of the low density of the styrene butadiene copolymer.

Although free of halogens, the film of the present invention, when used in packaging, substantially prevents moisture from entering the packaging. Furthermore, because the film is free of halogens, the film also reduces potential environmental hazards associated with manufacturing and disposal of films including halogens. The film also is resistant to degradation when contacted with oils, organic and alkaline solvents, or heat, because the cyclic olefin of the second layer is sandwiched between the first and third layers including styrene butadiene copolymer.

The pharmaceutical package of the present invention effectively protects the pharmaceutical product from dust and/or moisture due to incorporation of the film of the present invention into the blister of the pharmaceutical package. Because the pharmaceutical package includes the film that is free of the halogens, the pharmaceutical package, like the film, can be manufactured without the environmental hazards associated with the halogens. Also, because the film is resistant to degradation when contacted with oils or organic solvents, the pharmaceutical package can be handled by consumers without breaking down.

In still yet further embodiments of the invention, the composites include a cyclo-olefin copolymer layer directly melt-bonded to a styrene-butadiene copolymer layer.

Further features and advantages of the present invention will become apparent from the discussion that follows.

### Brief Description of Drawings

The invention is described in detail below with reference to the various figures wherein like numerals designate similar parts and wherein:
**Figure 1** is a cross-sectional view of a first embodiment of the film of the present invention;
**Figure 2** is a cross-sectional view of a second embodiment of the film of the present invention;
**Figure 3** is a cross-sectional view of a third embodiment of the film of the present invention;
**Figure 4** is a cross-sectional view of a fourth embodiment of the film of the present invention;
**Figure 5** is a cross-sectional view of a first embodiment of a pharmaceutical package of the present invention;
**Figure 6** is a cross-sectional view of a second embodiment of a pharmaceutical package of the present invention;
**Figure 7** is a cross-sectional view of a third embodiment of a pharmaceutical package of the present invention;
**Figure 8** is a cross-sectional view of a fourth embodiment of a pharmaceutical package of the present invention;
**Figure 9** is a cross-sectional view of a fifth embodiment of the pharmaceutical package of the present invention;
**Figure 10** is a view in perspective of a section of sheet continuously extruded in accordance with the present invention;
**Figure 11** is an enlarged cross-sectional view of the sheet in Figure 10;
**Figure 12** is a cross-sectional view of blister packaging which includes the film of the present invention; and
**Figure 12A** is an enlarged cross-sectional view of the blister sheet in **Figure 12****.**

### Detailed Description

The present invention is described in detail below with reference to the various examples and appended Figures. Modifications to particular examples of the present invention, set forth in the appended claims, will be readily apparent to those of skill in the art.

Unless otherwise indicated, terms are to be construed in accordance with their ordinary meaning. Following are some exemplary definitions of terms used in this specification and the appended claims.

The terms "film" and "sheet" are used interchangeably. Sheet may be used to refer to film that is thicker than 100 µm (100 microns) in some instances.

As used herein, the phrase "directly melt-bonded" is defined as application of a subject film layer to an object film layer, without a tie layer, adhesive, or other layer in between, where the layers are adhered to one another when in a molten or partially softened state. Typically, the layers are bonded together in their molten form. The subject layer may be melt-bonded to further layers by a co-extrusion process or a lamination process. The layers of the films of the present invention typically exhibit an interlayer peel adhesion strength of greater than 0.88 N/cm (0.5 lbf/in).

As used herein, the phrase "multilayer" or "multilayered" refers to two or more layers, which may be present in any order or combination.

Peel adhesion strength between layers was tested using a modified version of ASTM D903, a method used to measure the 180 degree peel strength of adhesives. According to the test, the rigid member is placed in the upper jaw and the flexible member is bent 180 degrees and held in the lower jaw. Unless otherwise noted, the test is run on a 1.5 cm (0.591 in) wide specimen, using a 30.5 cm/min (12 ipm) test speed, a 2.54 cm (1 inch) peel start extension and a 15.24 cm (6 inch) peel end extension. Typically, films made in accordance with the present invention exhibit a peel strength of greater than 0.35 N/cm (0.2 lbf/in) and preferably greater than 0.88 N/cm (0.5 lbf/in) and even more preferably greater than 1.75 N/cm (1 lbf/in). Peak peel strength is the highest value of the load measured per unit width.

Optical haze, which is a measurement of a scattering of light as it passes through a transparent material, is tested in accordance with ASTM D1003. In the examples below, a spectrophotometer was used to measure the haze values as set forth in Procedure B of ASTM D1003. The films of the present invention typically exhibit a correlated haze of less than 9%, more preferably a correlated haze of less than 5% and most preferably less than 3.5%.

Water Vapor Transmission Rate is a measurement, determined by ASTM F-1249, of a rate of water vapor transmission through a flexible barrier material, i.e., the film **(20)** of the present invention. The method is applicable for use with a film up to 3 mm thick.

Light Transmission is a measurement, determined by ASTM D-1003, of an amount of light that passes through a sample, i.e., the film **(20)** of the present invention.

The term "styrene-butadiene copolymers," sometimes referred to herein as SBC or SBCs are well known copolymers comprising styrene monomers and butadiene monomers. "Block copolymer" as used herein refers to any polymer containing repeating sequences of two or more distinct multiatomic units bonded together in a chain. Thus, styrene-butadiene block copolymers typically have a structure that can be represented by poly(styrene-b-butadiene-b-styrene). Styrene-butadiene block copolymers are typically made using anionic polymerization techniques using an alkyllithium initiator. The production of styrene-butadiene block copolymers primarily promotes the polymerization of styrene and butadiene monomers, but additional coupling agents can be interposed within the polymer chain in small amounts. Examples of acceptable coupling agents include alcohols, organohalogens, esters, chlorosilanes, and divinylbenzene. United States Patent No. 4,086,298 discloses examples of styrene-butadiene block copolymers and their method of manufacture. Styrene-butadiene copolymers are commercially available; acceptable SBC block copolymers for use in the present invention include Styrolux® 684D, Styrolux®3G55, and Styrolux® 3G33 manufactured by BASF Corporation. The following tables list properties of some Styrolux® copolymers:

**Properties of Styrolux® 3G33 and 684D**

| Property | ISO test method | 3G33 | 684D |
|---|---|---|---|
| Melt Volume Rate (200°C/5) kg, cc/10 min. | 1133 | 12 | 11 |
| | | | |
| Density (g/cm³) | 1183 | 1.02 | 1.01 |
| | | | |
| Izod impact (KJ/m²) 23°C | 180 | 3.5 | 4 |
| | | | |
| Vicat Softening Temperature (VST/B/50°C) | 306 | 56 | 59 |

**Properties of Styrolux® 3G55 Q420**

| Property | ASTM Test Method | 3G55 Q420 |
|---|---|---|
| Melt Flow Rate (200 °C/5 kg), g/10 min | D-1238 | 15 |
| Vicat, B/1 (120°C/h, 10 N), °C | D-1525 | 72 |

Other commercially available styrene-butadiene copolymers include Kraton™ D-1401P (Shell Chemicals) and Asaflex™ (Asahi Chemical).

Typically, the styrene butadiene copolymer includes at least 50 weight percent of styrene, from 5 to 50 weight percent of the butadiene, and up to 10 weight percent of additional polymers. More typically, the styrene butadiene copolymer includes of from 60 to 90 and most typically of from 70 to 80, parts by weight of styrene per 100 parts by weight of the styrene butadiene copolymer. Also, the styrene butadiene copolymer more typically includes of from 10 to 40 and most typically of from 20 to 30, parts by weight of the butadiene per 100 parts by weight of the styrene butadiene copolymer. Most preferably, the butadiene includes 1,3-butadiene. However, any butadiene known in the art may be included.

The styrene butadiene copolymer preferably has a melt flow rate of from 5 to 20, more preferably of from 8 to 17, and most preferably of from 10 to 15, g/10 minutes at 200°C/5 kg, as determined by ASTM D-1238. The melt flow rate is a measurement of a rate of extrusion of a molten styrene butadiene copolymer through a die of a specified length and diameter under prescribed conditions of temperature, load, and piston position in a barrel as a timed measurement is made. The styrene butadiene copolymer also preferably has a Vicat Softening Temperature of from 55 to 100, more preferably of from 60 to 95, and most preferably of from 65 to 90, °C, at 120°C/hr, 10N as determined by ASTM D-1525.

Useful cyclo-olefin copolymers, collectively referred to herein as COPs or COP resins are known in the art. For example, United States Patent No. 6,068,936 (Assignee: Ticona GmbH) and United States Patent No. 5,912,070 (Assignee: Mitsui Chemicals, Inc.) disclose several cycloolefin copolymers. Cycloolefin copolymers include cyclo-olefin monomers and acyclic olefin monomers, described further below.

Cyclo-olefins are mono- or polyunsaturated polycyclic ring systems, such as cycloalkenes, bicycloalkenes, tricycloalkenes or tetracycloalkenes. The ring systems can be monosubstituted or polysubstituted. In one embodiment of the present invention, the cyclic olefin preferably includes the general structure: 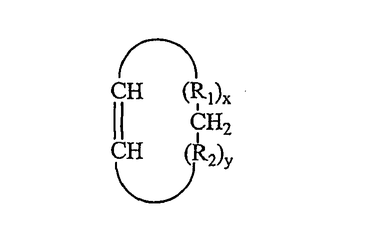 wherein each of R₁ and R₂ independently include one of a hydrogen and a hydrocarbon, and x and y independently include an integer less than or equal to 10. In another embodiment of the present invention the cyclic olefin includes at least one pendant organic group. The pendant organic group preferably includes, but is not limited to, alcohols, amines, carbonyls, ethers, hydrocarbons, nitriles, sulfides, and combinations thereof. Further, in another embodiment of the present invention, the cyclic olefin is selected from one of the general structures: 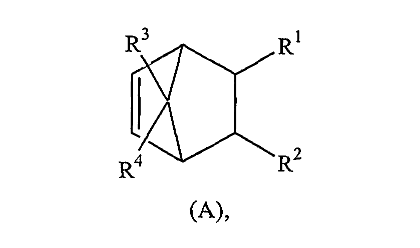 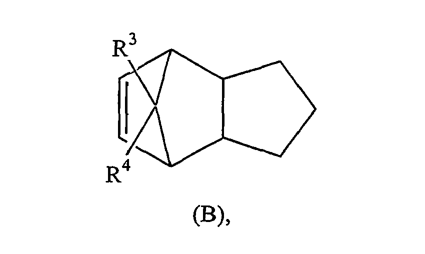 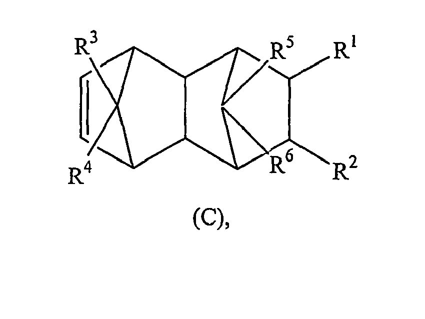 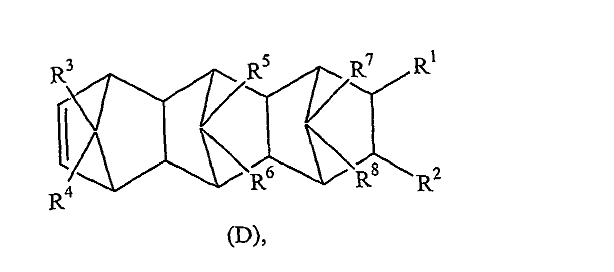 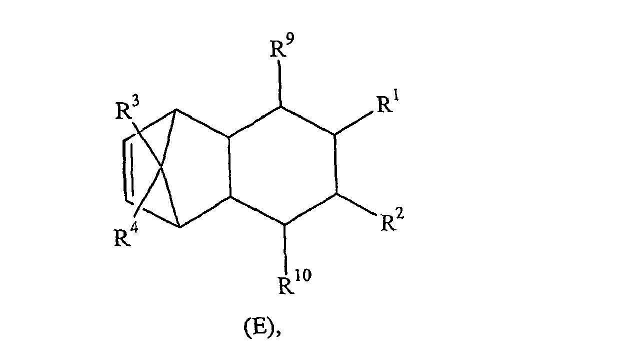 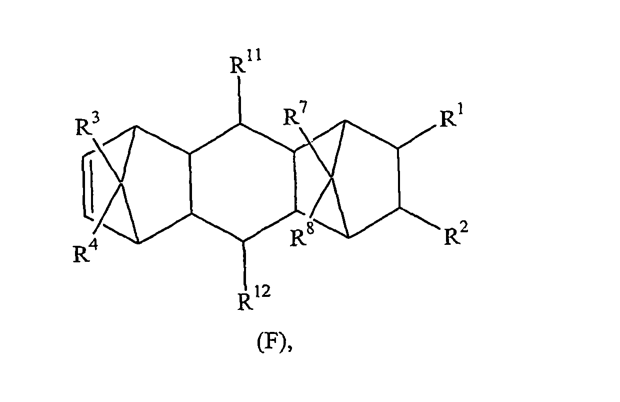 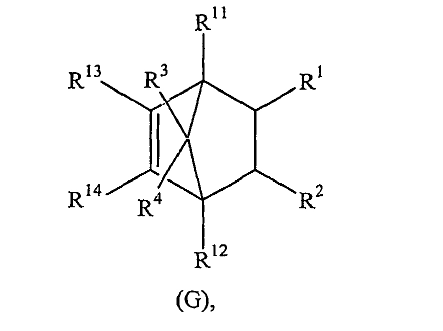 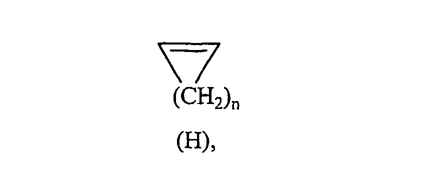 wherein each of R¹ through R¹⁴ independently include one of an aryl group, an alkyl group, a halogen, a hydrogen, and any compound including combinations thereof and n includes an integer less than or equal to 10. It is to be understood that each of R¹ through R¹⁴ may be the same or may be different. Preferably, if one of R¹ through R¹⁴ includes the aryl group, the aryl group includes of from 6 to 20 carbon atoms. Also, if one of R¹ through R¹⁴ includes the alkyl group, the alkyl group preferably includes of from 1 to 20 carbon atoms. Examples of suitable cyclic olefins include, but are not limited to, norbornene, dimethyl-octahydro-naphthalene, cyclopentene, (5-methyl) norbornene, and combinations thereof. Most preferably, the cyclic olefin includes norbornene. For descriptive purposes only, a chemical structure of norbornene is illustrated below. 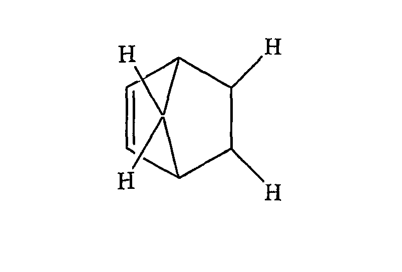 Cyclo-olefins are also represented by formulae I, II, III, IV, V or VI, or formula VII: 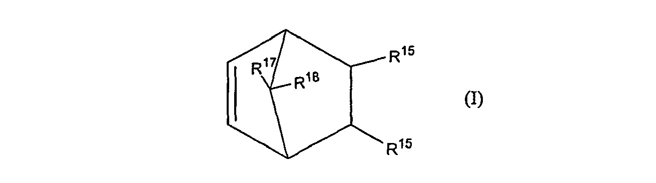 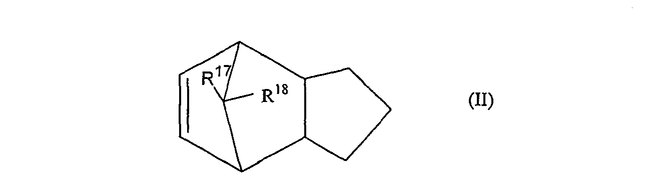 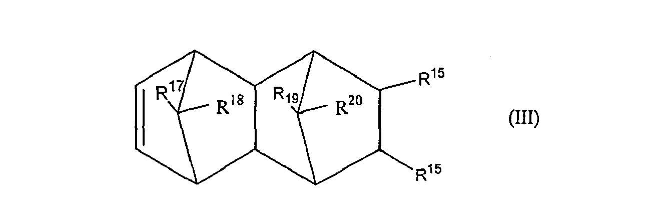 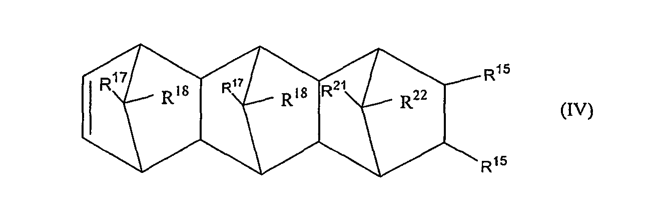 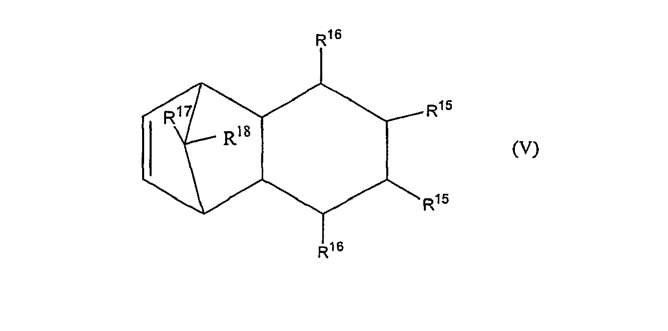 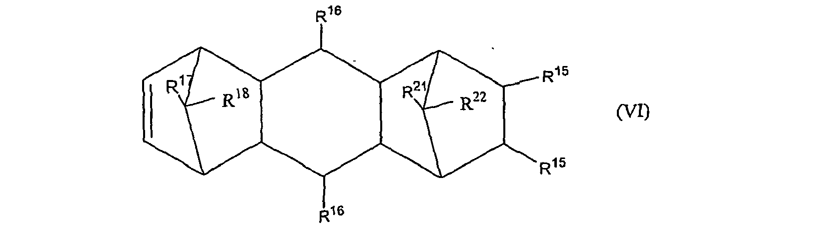 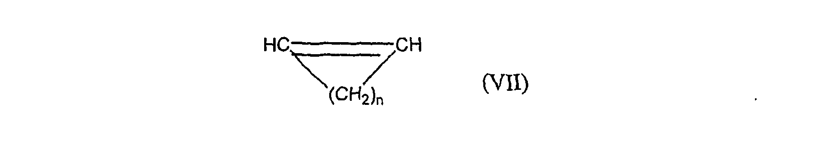 wherein R¹⁵ through R²² are the same or different and are H, a C₆-C₂₀ -aryl or C₁ - C₂₀ -alkyl radical or a halogen atom, and n is a number from 2 to 10. Examples of such cyclic olefin monomers are norbornene, dimethyl-octahydro-naphthalene, cyclopentene and (5-methyl)norbornene and the like, or mixtures thereof. These monomers can be made into homopolymer COP or polymerized with acyclic comonomers, which may be referred to generally as crosslinkers or simply as comonomers. If the second layer **(26)** of the film **(20)** includes the cyclic olefin copolymer and a comonomer, the comonomer is preferably selected from the group of alkanes, alkenes, alkynes, and combinations thereof. Examples of suitable acyclic olefin monomers which may be polymerized with the cyclo-olefins noted above are ethylene, propylene, butylene and the like, or mixtures thereof. A preferred cyclic olefin is norbornene, and a preferred acyclic olefin for reaction therewith is ethylene. If the cyclic olefin copolymer includes norbornene, the norbornene is preferably included in an amount of from 10 to 70 and more preferably of from 25 to 45, mole percent. If the cyclic olefin copolymer includes ethylene, preferably the ethylene is included in an amount of from 30 to 90 and more preferably of from 55 to 75, mole percent. However, it is contemplated that the norbornene and the ethylene may be included in any amount.

Cycloolefin copolymers are commercially available and an acceptable copolymer includes Topas® 8007F04, manufactured by Ticona, also from Zeon Chemicals of Louisville K.Y., under the trade name of Zeonex®, from JSR Corporation of Tokyo, Japan, under the trade name of Arton^{®}, and from Mitsui Petrochemical Industries of Tokyo, Japan. Most preferably, the cyclic olefin copolymer includes Topas^{®} 8007F-04 which includes approximately 36 mole percent norbornene and a balance of ethylene.

The cycloolefin polymers can be prepared with the aid of transition-metal catalysts, e.g. metallocenes. Suitable preparation processes are known and described, for example, in DD-A-109 225, EP-A-0 407 870, EP-A-0 485 893, United States Patent Nos. 6,489,016, 6,008,298, 6,608,936, and 5,912,070. Molecular weight regulation during the preparation can advantageously be effected using hydrogen. Suitable molecular weights can also be established through targeted selection of the catalyst and reaction conditions. Details in this respect are given in the abovementioned specifications.

The films of the present invention may be produced by, for example, co-extrusion techniques. Co-extrusion can be achieved by either (1) introducing the different polymer melt streams, from two or more extruders (one for each resin), in a combining block prior to the extrusion die; or (2) bringing the melt streams together within the die, using a multimanifold die. A multimanifold die is a die that has individual manifolds for each layer. Generally, the individual manifolds are designed to distribute a polymer layer uniformly before combining with other layers either inside or outside the die. Typically, multimanifold dies are flat or annular. Another suitable method for melt-bonding the layers contained in the films of the present invention is lamination. The multilayered films can be laminated by superimposing at least one polymeric layer on another polymeric layer and bonding the layers together while applying heat.

The multilayer films made according to the present invention may comprise two or more layers and may be arranged in various patterns. For example, where A is the styrene-butadiene copolymer and B is the cyclo-olefin copolymer, possible embodiments include AB/A, B/A/B, B/A, and A/B/A/B/A. The COP layer preferably comprises a core layer between SBC layers. SBC is more suitable as the outer layers because it has a pleasing tactile feel. The present invention also encompasses films having layers of any thickness. Preferably, however, the cyclo-olefin layer has a thickness from between 200-280 µm and the styrene-butadiene layer has a thickness of between 10-50µm. Overall thickness of the film of from 200-400 µm (200-400 microns) is particularly suitable for blister packaging sheet.

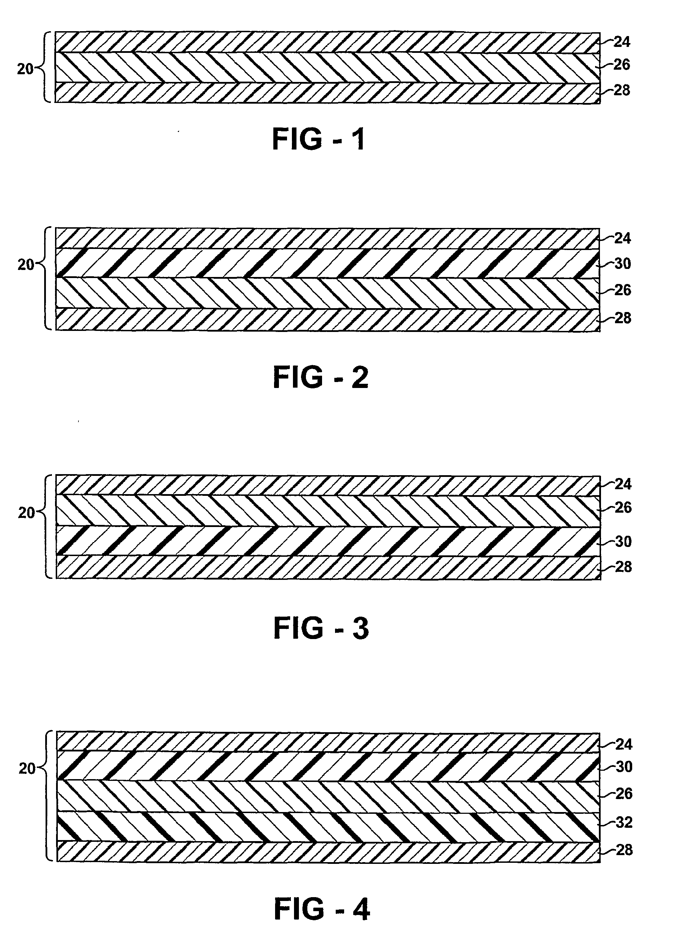

In one embodiment of the present invention, the film **(20)** includes three layers including first, second, and third layers **(24, 26, 28)**, as shown in **Figures 1** through 4. Specifically, the first layer **(24)** includes a styrene butadiene copolymer, and it is also substantially free of a cyclic olefin. The first layer **(24)** preferably has less than 10,000, more preferably less than 5,000, and even more preferably less than 1,000, parts of the cyclic olefin per one million parts of the first layer **(24).** Most preferably, the first layer **(24)** is totally free of the cyclic olefin. The third layer **(28)** is like the first layer **(24)** in composition. The second layer **(26)** comprises cyclic olefin and it is sandwiched between the first layer **(24)** and the third layer **(28)** to protect cyclic olefin from degradation that may be caused if contacted with any oils or any organic solvents. The second layer **(26)** is substantially free of the styrene butadiene copolymer and preferably has less than 10,000, more preferably less than 5,000, and even more preferably less than 1,000, parts of the styrene butadiene copolymer per one million parts of the second layer **(26).** Most preferably, the second layer **(26)** is totally free of the styrene butadiene copolymer.

It is also contemplated that the first layer may be of any thickness. However, the first layer **(24)** preferably has a thickness of from 13 µm to 305 µm, more preferably of from 25 µm to 205 µm, and most preferably of from 25 µm to 150µm. Similar thickness is contemplated for the third layer. The thickness of the first layer **(24)** contributes to both a light transmission and a haze of the film **(20).** The second layer **(26)** also preferably has a thickness of from 25µm to 250µm, more preferably of from 75µm to 205µm, and most preferably of from 125µm to 250µm. The thickness of the second layer **(26)** contributes, along with the cyclic olefin itself, to an effectiveness of the film **(20)** in preventing moisture from passing through the film **(20)** and to the film having a low water vapor transmission rate. This is especially important in certain packaging applications such as in pharmaceutical packages where the product may be sensitive to moisture. It is contemplated that the second layer **(26)** may be of any thickness. However, the second layer **(26)** is preferably four, and more preferably six, times thicker than the first layer **(24)** and the third layer **(28)** individually.

It should be noted that a film according to the present invention is preferably substantially free of halogens. The film preferably has less than 5,000, more preferably less than 900, and most preferably less than 100, parts of the halogens per one million parts of the film **(20).**

The films made in accordance with the present invention have the unexpected advantage of superior interlayer adhesion without the aid of an adhesive or tie layer. The absence of a tie layer is advantageous for several reasons. The multilayer film is easier to produce without the additional cost of adhesive or tie material and associated equipment. Tie layers may also impart detrimental optical properties to the film. Furthermore, the absence of a tie layer enables manufacturers with lower extrusion capacity to produce multilayered films in accordance with the present invention. For example, equipment with a maximum extrusion capacity of three layers would be able to produce a three layer SBC/COP/SBC film of the present invention, because no extruder capacity is utilized on the production of a tie layer. The films exhibit a surprisingly high peel adhesion value.

The film **(20)** may also include an intermediate layer **(30)** disposed between the first and second layers **(24, 26),** and/or between the second and third layers **(26, 28)** as shown in **Figures 2** through **4****.** If included, the intermediate layer **(30)** may include, but is not limited to, nylons, ethyl vinyl alcohol, polyolefins including, but not limited to polyethylene and polypropylene, polyester, paper, and combinations thereof. The film **(20)** may also include a second intermediate layer **(32)** disposed between the second and third layers **(26, 28),** as shown in **Figure 4****.** If the second intermediate layer **(32)** is included, the second intermediate layer **(32)** is preferably the same as the intermediate layer **(30).** In scenarios where certain intermediate layers **(30, 32)** are utilized, tie layers may be necessary. If the film **(20)** does not have any tie layers, the film **(20)** can be manufactured at a lower cost and with fewer raw materials.

It is also contemplated in accordance with the present invention that the SBC/COP film may be incorporated into a multilayer film, laminate or composite comprising other component layers. Acceptable co-layers can include polyolefins, for example homopolymers or copolymers of C₂-C₄₀ α-olefins; polar polymers, for example homopolymers and copolymers of esters, amides, acetates, and anhydrides; and other layers such as paper, cardboard, kraft paper, wood, metal, metal foils, metallized surfaces, glass, fabric, other fibers, and surfaces coated with substrates such as ink, dye, and the like. It will also be apparent to one ordinarily skilled in the art that additives may be added to one or more layers in the films of the present invention. Acceptable additives include lubricants, dyes, pigments, antioxidants, fillers, processing aids, UV stabilizers, neutralizers, antiblock, or the like; the additives being used at a level that will not change the basic and novel characteristics of tie films, that is, good peel strength and optical clarity.

The multilayer films produced according to the present invention are amenable to thermoforming processes whereby containers and packaging structures are made. "Thermoforming", "thermoformed" and like terminology is likewise given its ordinary meaning. In the simplest form, thermoforming is the draping of a softened sheet over a shaped mold. In the more advanced form, thermoforming is the automatic high speed positioning of a sheet having an accurately controlled temperature into a pneumatically actuated forming station whereby the article's shape is defined by the mold, followed by trimming and regrind collection as is well known in the art. Still other alternative arrangements include the use of drape, vacuum, pressure, free blowing, matched die, billow drape, vacuum snap-back, billow vacuum, plug assist vacuum, reverse draw with plug assist, pressure bubble immersion, trapped sheet, slip, diaphragm, twin-sheet cut sheet, twin-sheet roll-fed forming or any suitable combinations of the above. Details are provided in J.L. Throne's book, *Thermoforming*, published in 1987 by Coulthard (see particularly pages 21 through 29). Suitable alternate arrangements also include a pillow forming technique which creates a positive air pressure between two heat softened sheets to inflate them against a clamped male/female mold system to produce a hollow product. Metal molds are etched with patterns ranging from fine to coarse in order to simulate a natural or grain like texturized look. Suitable formed articles are trimmed in line with a cutting die and regrind is optionally reused since the material is thermoplastic in nature. Other arrangements for productivity enhancements include the simultaneous forming of multiple articles with multiple dies in order to maximize throughput and minimize scrap.

Preferably, to form the first, second, and third layers **(24, 26, 28),** the styrene butadiene copolymer and cyclic olefin are introduced into an extruder, which may be a single screw extruder. Most preferably, the styrene butadiene copolymer and the cyclic olefin are introduced into two in-feed hoppers of a first and a second extruder, a first extruder handling the styrene butadiene copolymer for the first and third layers **(24, 28)** and a second extruder handling the cyclic olefin for the second layer **(26).** The first and the second extruders preferably melt and plasticize the styrene butadiene copolymer and the cyclic olefin, respectively.

Preferably, the step of forming the first layer **(24)** includes extruding the first layer **(24).** Also, preferably, the step of forming the second layer **(26)** includes extruding the second layer **(26).** Further, the step of forming the third layer **(28)** preferably includes extruding the third layer **(28).** Most preferably, the first, second, and third layers **(24, 26, 28)** are simultaneously extruded. However, it is also contemplated that the first, second, and third layers **(24, 26, 28)** may be extruded in any order and at different times. The first, second, and third layers **(24, 26, 28)** are preferably co-extruded such that there is no blending of the first, second, and third layers **(24, 26, 28).** If the first, second, and third layers **(24, 26, 28)** were blended in any manner in this embodiment, the film **(20)** may exhibit undesirable properties such as shrinkage and a lack of moisture prevention.

Most preferably, the first and the second extruders form two separate streams of the styrene butadiene copolymer and the cyclic olefin, respectively. Preferably, the first and second extruders include a temperature zone. However, the first and second extruders may include more than one temperature zone. Although the temperature zone may be heated to any temperature, the temperature zone of the first and second extruders is preferably heated to a temperature from 175 to 220°C.

The streams from the first and second extruders are preferably fed into a single manifold extrusion die or a multi manifold co-extrusion die to form the first, second, and third layers **(24, 26, 28)** of the film **(20).** While in the co-extrusion die, the first, second, and third layers **(24, 26, 28)** are preferably juxtaposed and combined, and emerge from the co-extrusion die as the film **(20)** of the present invention. However, it is also contemplated that film **(20)** can be formed using a single manifold extrusion die utilizing feedblock technology.

It is further contemplated that the first, second, and third layers **(24, 26, 28)** may be melt-bonded together. Melt-bonding includes directly applying a subject film layer to an object film layer wherein both the subject and object film layers are in a partially softened or molten form. A suitable melt-bonding technique includes lamination techniques known in the art.

After exiting the die, the film **(20)** is preferably cast onto and passed around a first controlled temperature casting roll. The film **(20)** is then preferably passed onto a second controlled temperature casting roll, which is normally cooler than the first controlled temperature casting roll. The first and second controlled temperature casting rolls largely control the rate of cooling of the film **(20)** after it exits the co-extrusion die. Additional controlled temperature casting rolls may also be employed.

Another method for utilizing film or sheet of the present invention is blow-molding, where a hot parison incorporating the multilayer films of the present invention is expanded against the surfaces of a mold, typically using compressed air or other compressed gases. Articles of manufacture using film or sheet of the present invention can also be produced by extrusion blow molding. Extrusion blow molding employs standard blow molding techniques where the parison is produced by extrusion.

The multilayer structures of the invention exhibit excellent permeation barrier to moisture, solvents, microbes, oxygen and other gasses and thus are suitable for medical or biological barrier, including specimen containers; food contact applications, especially food packaging; and general purpose barrier as will be appreciated by one of skill in the art. The optical properties of the inventive composites are especially desired in applications where visual inspection or optical characterization through the composite are important.

The film preferably has a peel strength of greater than 0.5 more preferably of greater than 1.0, and most preferably of greater than 26,79 kg/m (1.5, lbs_{f}/in), as determined by ASTM D-903. The measurement of peel strength of greater than 8.93 kg/m (0.5 lbs_{f}/in) exhibited by the film **(20)** is desirable because the measurement indicates that the first, second, and third layers **(24, 26, 28)** of the film **(20)** are not easily pulled apart.

A measurement of the water vapor transmission rate of the film **(20)** includes a measurement of an amount of water vapor that passes through a barrier material, i.e., the film **(20),** over 24 hours. Preferably, the film **(20)** has a water vapor transmission rate of from 0.20 to 5.00, more preferably of from 0.20 to 3.00, and most preferably of from 0.20 to 0.50, g/m²/24 hrs, as determined by ASTM F-1249.

Further, the film **(20)** preferably has a density of from 0.95 to 1.05, more preferably of from 0.98 to 1.03, and most preferably of from 1.00 to 1.02, g/cm³. Due to a low density of the film, the film provides a 35% film advantage compared to competitive halogen-containing films. The low density of the film can be attributed to the styrene butadiene copolymer that is included in the first and third layers **(24, 28)** of the film **(20)** and the cyclic olefin, that is included in the second layer **(26)** of the film **(20).** A higher quantity of the film **(20)** of the subject invention can be purchased at the same weight as a comparative film because of the low density of the styrene butadiene copolymer.

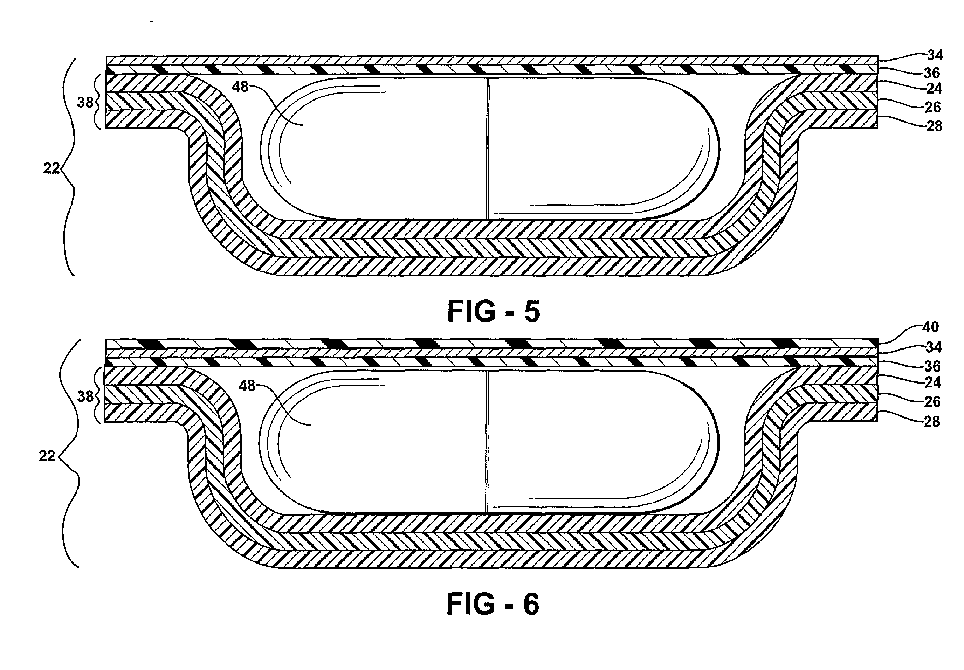

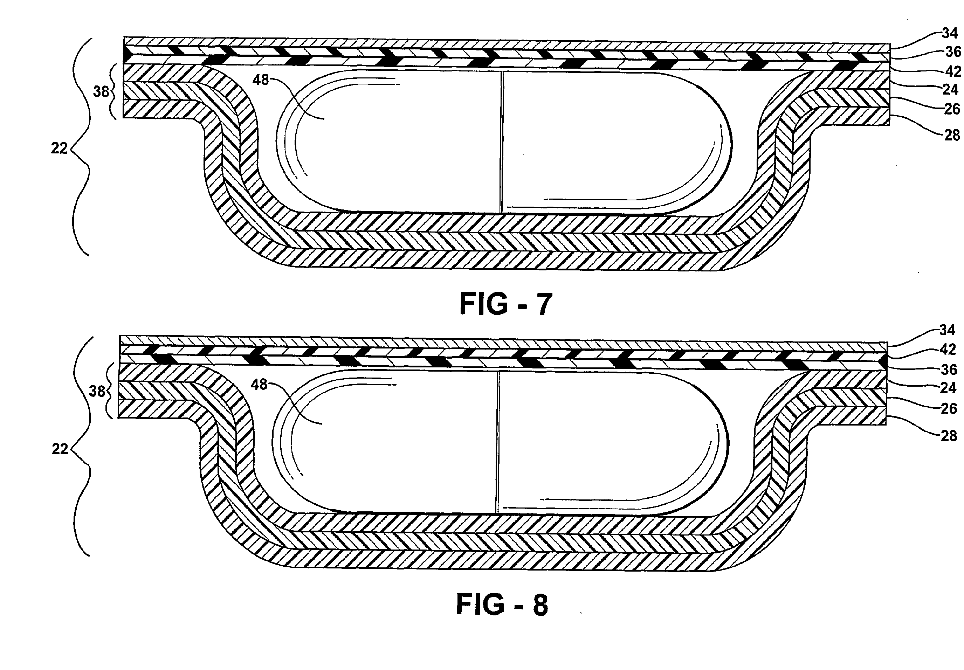

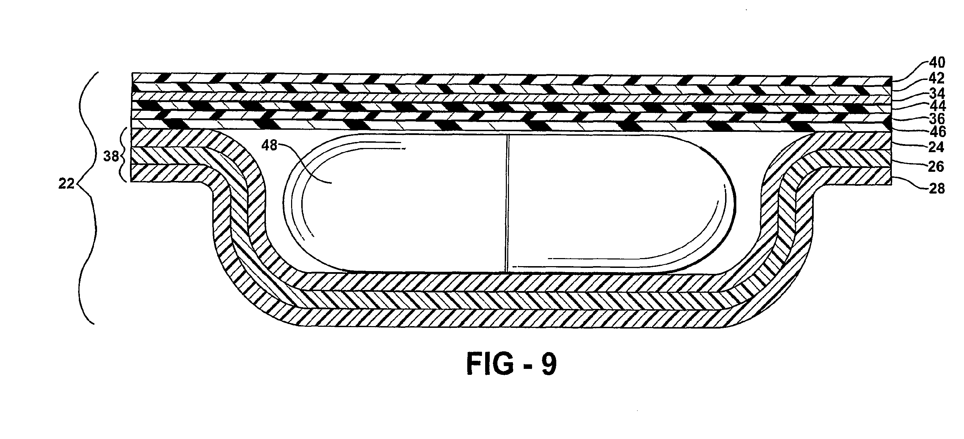

With particular reference to **Figures 5** through **9****,** the pharmaceutical package **(22),** according to preferred embodiments of the present invention, will now be described in greater detail. As first introduced above, the film **(20)** of the present invention can be used to form a blister **(38)** in the pharmaceutical package **(22)** and seal the content of the pharmaceutical package **(22)** to protect the content from dust and/or moisture.

The pharmaceutical package **(22)** includes a base layer **(34)** that provides a base for the pharmaceutical package **(22).** The base layer **(34),** also known as a lidding layer, includes a material selected from the group of aluminum, paper, cardboard, wood, glass, fabric, fibers, polyester, and combinations thereof. Preferably, the base layer includes aluminum. Generally, if aluminum is included in the base layer **(34),** the aluminum may be hard aluminum, soft aluminum, combined with paper, combined with nylon, and/or combined with paper, nylon, and polyester.

With continued reference to **Figures 5** through **9****,** the pharmaceutical package **(22)** also includes a sealant layer **(36)** disposed on the base layer **(34)** that preferably acts as an adhesive between the base layer **(34)** and the blister **(38).** In the context of the present invention, the sealant layer **(36)** does not have to be in direct contact with the base layer **(34).** However, it is contemplated that the sealant layer **(36)** may be disposed in contact with the base layer **(34).**

The sealant layer **(36)** preferably is chemically compatible with both the base layer **(34)** and any other layers disposed on the sealant layer **(36)** to ensure maximum adhesion between the layers of the pharmaceutical package **(22).** The sealant layer **(36)** may include, but is not limited to, modified polyolefins, copolymers of alkylenes, styrenes, compounds selected from the group of acrylic acid, alkyl acrylic acid, acrylates, and alkyl acrylates, and combinations thereof.

The modified polyolefins suitable for use in the sealant layer **(36)** may be prepared from olefins including homopolymers or copolymers of an α-olefins having from 2 to 40 carbons such as ethylene, propylene, butene-1, pentene-1, hexene-1,4-methylpentene-1, octene-1, and combinations thereof. One suitable example of the modified polyolefin that may be used in the sealant layer **(36)** includes a functionalized olefin with at least one functional moiety.

Examples of suitable functional moieties include, but are not limited to, unsaturated carboxylic acids, unsaturated carboxylic acid anhydrides, amines, epoxies, and combinations thereof. Unsaturated carboxylic acids and anhydrides that may be used in the functional olefin include, but are not limited to, maleic acid and anhydride, fumaric acid and anhydride, crotonic acid and anhydride, citraconic acid and anhydride, itaconic acid and anhydride, and combinations thereof. Suitable amines that may be used in the functional olefin include, but are not limited to, aliphatic or aromatic amines, primary, secondary and tertiary amines, such as 2,4,6-tribromoaniline, methylamine, ethylamine, propylamine, dimethylamine, N-methylaniline, ethylmethylamine, 2-(N-methylamine)heptane, sec-butyldimethylamine, N-ethyl-N-methylaniline, trimethylamine, N,N-dimethylanaline, and combinations thereof. Suitable epoxies that may be used in the functional olefin include, but are not limited to, those having from 2 to 20 carbon atoms. Those skilled in the art will choose a suitable sealant layer **(36)** based on desirable properties, economics, and availability.

With continued reference to **Figures 5** through **9****,** the pharmaceutical package **(22)** also includes the blister **(38)** disposed on the sealant layer **(36)** and formed from the film **(20)** of the present invention. In the context of the present invention, the blister **(38)** does not have to be in direct contact with the sealant layer **(36).** However, it is contemplated that the blister **(38)** may be disposed in contact with the sealant layer **(36).**

The blister **(38)** is preferably thermoformed or molded from the film **(20)** of the present invention such that the blister **(38)** has an outer surface, an inner surface, and a cavity. The blister **(38)** may be of any desired shape. Preferably, the blister **(38)** is formed in a rectangular or hemispherical shape. In **Figures 5** through 9, the blister **(38)** is shown with the layers **(24, 26, 28)** of the film. However, it is to be understood that in all Figures and in all embodiments of the present invention, the blister **(38)** may include the first and second intermediate layers **(30, 32)** of the film **(20).** After the blister **(38)** is shaped, a pharmaceutical product **(48)** such as a tablet or capsule is preferably disposed within the blister **(38),** i.e. within the cavity, and the blister **(38)** is preferably sealed. However, it is also contemplated that, after the blister **(38)** is shaped, a non-pharmaceutical product including, but not limited to, a nutritional supplement, a vitamin, a foodstuff, and combinations thereof, may be disposed within the blister **(38).** Also, if the pharmaceutical product **(48)** is disposed within the blister **(38),** preferably there is a space defined by the blister **(38)** which allows the pharmaceutical product to move within the blister **(38).**

The pharmaceutical package **(22)** may also include a lacquer layer **(40)** disposed on the base layer **(34)** and sandwiching the base layer **(34)** between the lacquer layer **(40)** and the sealant layer **(36).** The lacquer layer **(40)** may be used as a surface for printing information on the pharmaceutical package **(22).** The lacquer layer **(40)** is preferably compatible with an ink used for printing to facilitate adhesion of the ink to the lacquer layer **(40)** resulting in decreased production costs of the pharmaceutical package **(22).** The lacquer layer **(40)** may include a tint. However, any lacquer layer known in the art may be used.

The pharmaceutical package **(22)** may also include an interior layer **(42).** The interior layer **(42)** may be disposed anywhere in the pharmaceutical package. However, in one embodiment, the interior layer **(42)** is preferably disposed between the lacquer layer **(40)** and the base layer **(34).** In another embodiment, the interior layer **(42)** is preferably disposed between the base layer **(34)** and the sealant layer **(36).** In yet another embodiment, the interior layer **(42)** is preferably disposed between the sealant layer **(36)** and the blister **(38).** It is to be understood that the pharmaceutical package **(22)** may also include second and third interior layers **(44, 46).** If the second and/or third interior layers **(44, 46)** are included, the second and/or third interior layers **(44, 46)** are preferably the same as the interior layer **(42).** However, the second and/or third interior layers **(44, 46)** may be different than the interior layer **(42).**

If included in the pharmaceutical package **(22),** the interior layer **(42),** in addition to the second and third interior layers **(44, 46),** preferably includes a material selected from the group of alcohols, polyamides, polyesters, polyolefins, polystyrenes, acrylics, polyurethanes, and combinations thereof. Suitable alcohols for use in the interior layer **(42)** include, but are not limited to, alkyl vinyl alcohols. Preferably, if the alcohol is used in the interior layer **(42)** the alcohol includes ethyl vinyl alcohol. Suitable polyamides for use in the interior layer **(42)** include, but are not limited to, polyamide homopolymers, copolymers, and combinations thereof.

Useful polyamide homopolymers include, but are not limited to, poly(4-aminobutyric acid) (nylon 4), poly(6-aminohexanoic acid) (nylon 6, also known as poly(caprolactam)), poly(7-aminoheptanoic acid) (nylon 7), poly(8-aminooctanoic acid)(nylon 8), poly(9-aminononanoic acid) (nylon 9), poly(10-aminodecanoic acid) (nylon 10), poly(11-aminoundecanoic acid) (nylon 11), poly(12-aminododecanoic acid) (nylon 12). Useful polyamide copolymers include nylon 4,6, poly(hexamethylene adipamide) (nylon 6,6), poly(hexamethylene sebacamide) (nylon 6,10), poly(heptamethylene pimelamide) (nylon 7,7), poly(octamethylene suberamide) (nylon 8,8), poly(hexamethylene azelamide) (nylon 6,9), poly(nonamethylene azelamide) (nylon 9,9), poly(decamethylene azelamide) (nylon 10,9), poly(tetramethylenediamine-co-oxalic acid) (nylon 4,2), the polyamide of n-dodecanedioic acid and hexamethylenediamine (nylon 6,12), the polyamide of dodecamethylenediamine and n-dodecanedioic acid (nylon 12,12) and combinations thereof.

Useful polyamide copolymers include caprolactam/hexamethylene adipamide copolymer (nylon 6,6/6), hexamethylene adipamide/caprolactam copolymer (nylon 6/6,6), trimethylene adipamide/hexamethylene azelaiamide copolymer (nylon trimethyl 6,2/6,2), hexamethylene adipamide-hexamethylene-azelaiamide caprolactam copolymer (nylon 6,6/6,9/6), poly(tetramethylenediamine-co-isophthalic acid) (nylon 4,I), polyhexamethylene isophthalamide (nylon 6,I), hexamethylene adipamide/hexamethylene-isophthalamide (nylon 6,6/61), hexamethylene adipamide/hexamethyleneterephthalamide (nylon 6,6/6T), poly (2,2,2-trimethylhexamethylene terephthalamide), poly(m-xylylene adipamide) (MXD6), poly(p-xylylene adipamide), poly(hexamethylene terephthalamide), poly(dodecamethylene terephthalamide), polyamide 6T/61, polyamide 6/MXDT/I, polyamide MXDI, and combinations thereof.

Non-limiting examples of suitable polyolefins include, but are not limited to, low density polyethylenes, linear low density polyethylenes, linear medium density polyethylenes, linear very-low density polyethylenes, linear ultra-low density polyethylenes, high density polyethylenes, metallocenes, and combinations thereof. Other suitable polyolefins include, but are not limited to, polyethylenes, polypropylenes, polybutylenes, polybutene-1, polypentene-1, poly-3-methylbutene-1, poly-4-methylpentene-1, polyhexene, copolymers of polyolefins, copolymers of olefins, and combinations thereof. Non-limiting examples of suitable polyesters for use in the interior layer **(42)** include, but are not limited to, polyethylene terephthalate, glycol modified polyethylene terephthalate, and combinations thereof.

Each of the layers of the pharmaceutical package **(22)** including the base layer **(34),** the sealant layer **(36),** the lacquer layer **(40),** the interior layers **(42, 44, 46),** and the blister **(38)** may optionally include one or more conventional additives whose uses are well known to those skilled in the art. The use of such additives may be desirable in enhancing formation of the pharmaceutical package **(22).** Examples of such additives include oxidative and thermal stabilizers, impact modifiers such as thermoplastic olefins, thermoplastic elastomers, styrene butadiene rubber, and combinations thereof, lubricants, release agents, flame-retarding agents, oxidation inhibitors, oxidation scavengers, neutralizers, antiblock agents, dyes, pigments and other coloring agents, ultraviolet light absorbers and stabilizers, organic or inorganic fillers including particulate and fibrous fillers, reinforcing agents, nucleators, plasticizers, waxes, hot melt adhesives, and combinations thereof. These additives may be used in any amount in any of the layers **(34, 36, 40, 42, 44, 46)** and in the blister **(38)** of the pharmaceutical package **(22).** Representative ultraviolet light stabilizers include, but are not limited to, various substituted resorcinols, salicylates, benzotriazole, benzophenones, and combinations thereof. Suitable lubricants and release agents include, but are not limited to, stearic acid, stearyl alcohol, and stearamides. Exemplary flame-retardants include, but are not limited to, organic halogenated compounds, including decabromodiphenyl ether, inorganic compounds, and combinations thereof. Suitable coloring agents including dyes and pigments include, but are not limited to, cadmium sulfide, cadmium selenide, titanium dioxide, phthalocyanines, ultramarine blue, nigrosine, carbon black and combinations thereof. Representative oxidative and thermal stabilizers include, but are not limited to, metal halides, such as sodium halides, potassium halides, lithium halides, cuprous halides, as well as corresponding chlorides, bromides, and iodides, respectively, and combinations thereof. Also, hindered phenols, hydroquinones, aromatic amines, and combinations thereof may be included. Exemplary plasticizers include, but are not limited to, lactams such as caprolactam and lauryl lactam, sulfonamides such as *ortho-* and *para*-toluenesulfonamide and N-ethyl, N-butyl benylnesulfonamide, and combinations thereof, as well as other plasticizers known in the art.

The pharmaceutical package **(22)** may be assembled via a variety of means. In one embodiment of the present invention, the base layer **(34),** sealant layer **(36),** and blister **(38)** are attached by heat-sealing under heat and pressure. Heat-sealing techniques are well known in the art. Typically, the base and sealant layers **(34, 36)** and the blister **(38)** are heat sealed by disposing the individual base and sealant layers **(34, 36)** and the blister **(38)** on one another under conditions of sufficient heat and pressure to cause the base and sealant layers **(34, 36)** and the blister **(38)** of the pharmaceutical package **(22)** to combine into a unitary structure. Typically the base and sealant layers **(34, 36)** and the blister **(38)** are disposed on one another and pressed together by techniques well known in the art. The heat sealing is preferably performed at temperatures of from 120 to 175, more preferably of from 130 to 175, and most preferably of from 150 to 175,°C. Once the base and sealant layers **(34, 36)** and the blister **(38)** are combined into the unitary structure, the pharmaceutical package **(22)** is complete.

Once complete, the film **(20)** used to form blister **(38)** of the pharmaceutical package **(22)** preferably has a water vapor transmission rate of from 0.20 to 5.00, more preferably of from 0.20 to 3.00, and most preferably of from 0.20 to 0.50, g/m²/24 hrs, as determined by ASTM F-1249. Preferably, the film **(20)** also has a light transmission of from 88 to 93, and most preferably of from 90 to 93, percent, as determined by ASTM D-1003. Further, the film **(20)** also preferably has a haze of from 2 to 9, more preferably of from 2 to 6, and most preferably of from 2 to 4, percent, also determined by ASTM D-1003.

The following examples are intended to be demonstrative of preferred embodiments of the present invention. It will be apparent to those of ordinary skill in the art that many changes can be made to specific embodiments within the scope of the invention.

### Film Performance Example 1 - Co-Extrusion

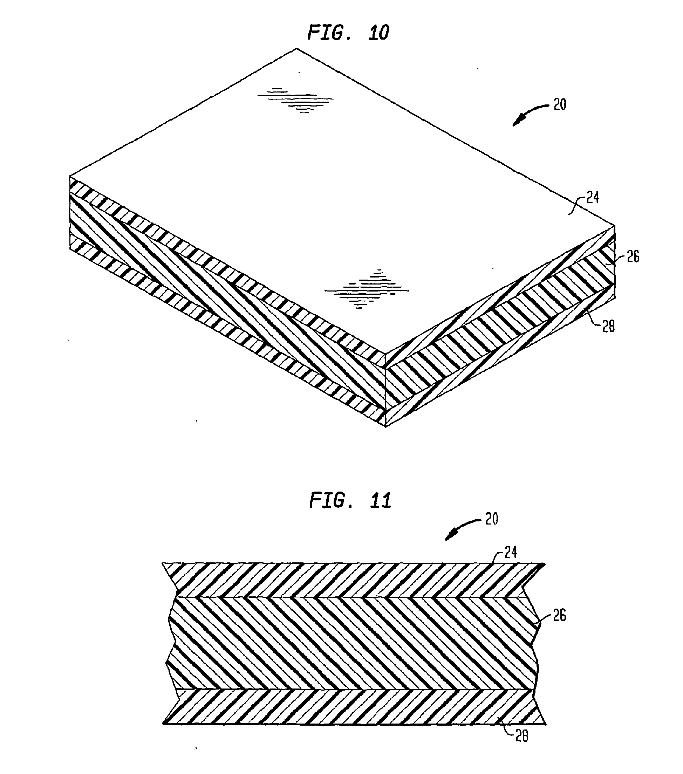

Using two extruders connected to a multimanifold die, the following resins were co-extruded to produce a continuous multilayer sheet **20** as shown in **Figure 10****.**

| Resin | Source |
|---|---|
| Topas® 8007F04 | Ticona, LLC |
| Styrolux® 684D | BASF Corporation |

Topas® 8007F04 is a cyclo-olefin copolymer contains approximately 36 mol % norbornene monomers, balance ethylene. The Topas® resin was melted in extruder 1 and the Styrolux® resin was melted in extruder 2. As stated earlier, Styrolux® 684D is a styrene-butadiene block copolymer, which contains approximately 78 wt. % styrene. **Figure 11** is a close-up, cross-sectional view of the continuous sheet shown in **Figure 10****.** Referring to **Figures 10** and **11**, film **20** shows a styrene-butadiene layer **24**, a cyclo-olefin core layer **26**, and another styrene-butadiene layer **28**. The cyclo-olefin copolymer makes up the core layer and has a thickness of 240 µm (240 microns). The styrene-butadiene copolymer makes up the two outer layers, each having a thickness of 30 µm (30 microns). The multilayer film was extruded under the following conditions:

**Cyclo-olefin Extrusion Conditions, Extruder 1**

| | (°C) |
|---|---|
| Temperature Zone 1 | 247 |
| Temperature Zone 2 | 259 |
| Temperature Zone 3 | 240 |
| Temperature Zone 4 | 240 |
| Polymer Exit Temperature | 266 |

**Styrene-Butadiene Extrusion Conditions, Extruder 2**

| | (°C) |
|---|---|
| Temperature Zone 1 | 177 |
| Temperature Zone 2 | 195 |
| Temperature Zone 3 | 210 |
| Temperature Zone 4 | 215 |
| Polymer Exit Temperature | 219 |

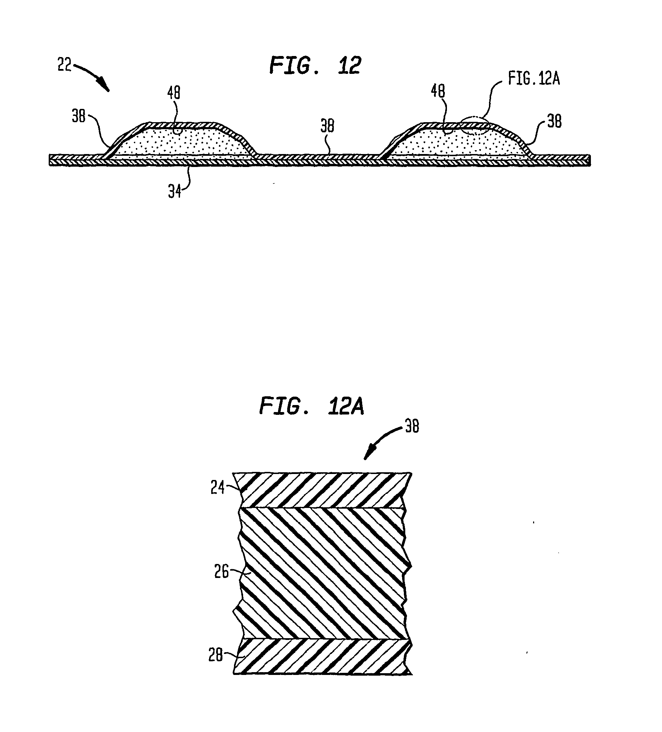

The films made in accordance with the present invention are particularly suitable to being thermoformed into blister packaging. "Blister packaging" and like terminology refers to packaging that has a blister-like plastic covering that is affixed to a lidding layer which usually contains cardboard. The blister-like region of plastic generally holds items such as pills, tablets, caplets, or capsules. Typically, the objects in the blister packaging are pharmaceutical or medicinal goods, nutritional supplements, vitamins, food, gum, etc. **Figure 12** shows a cross-section of exemplary thermoformed blister packaging **22** which has a thermoformed blister film sheet **38** including a film of the present invention. The blister packaging also has a lidding sheet **34.** The lidding sheet is a laminate of polyester, aluminum and paper. Other exemplary lidding materials include sheet which comprises rigid foil with a heat-sealable lacquer. The blister sheet is shaped by thermoforming into domes **48,** which form receptacle portions to hold items, such as a dosage of medicine, food, etc. **Figure 12A** is an enlarged cross-sectional view of the blister film sheet **38,** illustrating the multilayered structure of the film, having an outer layer **24** of styrene-butadiene copolymer, a core layer **26** of cyclo-olefin copolymer, and an inner layer **28** of styrene-butadiene copolymer. Further discussion of blister packaging appears in United States Patent No. 6,830,153 to French et al..

### Film Performance Examples 2 - 5: Optical Haze

Four samples of films were tested of haze in accordance with ASTM D1003. Example 2 is a monolayer film of Topas® 8007. Examples 3-5 are all co-extruded three layer films having the pattern A/B/A where A is the styrene-butadiene layer and B is the cycloolefin layer. The A layer was extruded at a thickness of 30 µm (30 microns) and the B layer was extruded at a thickness of 240 µm (240 microns). The films used in Examples 3-5 were co-extruded according to the conditions in Film Performance Example 1.

**Table 1 - Haze Data**

| Example | Total thickness (in) | A layer | B layer | Correlated Haze (%) |
|---|---|---|---|---|
| 2 | 0.01 | N/A | Topas® 8007 | 0.4 |
| 3 | 0.012 | Styrolux® 3G33 | Topas® 8007 | 4.2 |
| 4 | 0.012 | Styrolux® 684D | Topas® 8007 | 2.6 |
| 5 | 0.013 | Styrolux® 3G55 | Topas® 8007 | 3.1 |

### Film Performance Polymer Example 6 - 8:

Three films were co-extruded according to the conditions described in Film Performance Example 1 and tested for peel adhesion, haze, light transmission, and water vapor transmission according to ASTM test methods. Other physical properties such as Thickness and Density were also determined. The extruded films are three layer films having the pattern A/B/A where A is the styrene-butadiene layer and B is the cyclo-olefin layer. The A layer was extruded at a thickness of 30 µm (30 microns) and the B layer was extruded at a thickness of 240 µm (240 microns). Each value is an average of five samples.

**Table 2 - Film Samples**

| Example Number | A layer | Source | B layer | Source |
|---|---|---|---|---|
| 6 | Styrolux® 684D | BASF | Topas® 8007 | Ticona of Florence, KY |
| 7 | Styrolux® 3G33 | BASF | Topas® 8007 | Ticona of Florence, KY |
| 8 | Styrolux® 3G55 | BASF | Topas® 8007 | Ticona of Florence, KY |

The Light Transmission and Haze are set forth in Table 3 as an average measurement of five samples of the film **(20).** The Water Vapor Transmission Rate is set forth in Table 3 as an average measurement of two samples of the film **(20).** The Density is set forth in Table 3 as a measurement of one sample of the film **(20).**

**Table 3**

| **Physical Properties of Film** | **Test Method (ASTM)** | **Units** | **Example 6 Film** | **Example 7 Film** | **Example 8 Film** |
|---|---|---|---|---|---|
| Thickness | N/A | µm | 300 | 300 | 300 |
| Density | N/A | g/cm³ | 1.02 | 1.02 | 1.02 |
| Water Vapor Transmission Rate | F-1249 | g/m²/24 hrs. | 0.31 | 0.32 | 0.28 |
| Light Transmission | D-1003 | % | 93 | 93 | 93 |
| Haze | D-1003 | % | 2.2 | 2.9 | 2.4 |
| Peel Strength | D-903 | kg/m (lbs_{f}/in.) | 30.72 (1.72) | 28.93 (1.62) | 13.22 (0.74) |
| Peak Peel Strength | D-903 | kg/m (lbs_{f}/in.) | 33.75 (1.89) | 30.18 (1.69) | 14.29 (0.80) |
| Yield | N/A | m²/kg | ∼3.20 | ∼3.20 | ∼3.20 |

### Film Performance Examples 9-13:

The physical properties of the first, second, and third layers of the film produced in Film Performance Example 6 were also determined by ASTM test methods. These physical properties include all of the physical properties described above except Peel Strength. The first and third layers of the film including styrene butadiene copolymer were tested separately from the second layer. The Light Transmission and Haze are set forth in Table 4 as an average measurement of five samples of the first, second, and third layers **(24, 26, 28)** of the film **(20).** The Water Vapor Transmission Rate is set forth in Table 4 as an average measurement of two samples of the first, second, and third layers **(24, 26, 28)** of the film **(20).** The Density is set forth in Table 4 as a measurement of one sample of the first, second, and third layers **(24, 26, 28)** of the film **(20).**

**Table 4**

| **Physical Properties of the Layers of the Film** | **Test Method (ASTM)** | **Units** | **Example 9: Styrene Butadiene Copolymer First/Third Layers** | **Example 10: Styrene Butadiene Copolymer First/Third Layers** | **Example 11: Styrene Butadiene Copolymer First/Third Layers** |
|---|---|---|---|---|---|
| Thickness | N/A | µm | 25.4 | 50.8 | 101.6 |
| Density | N/A | g/cm³ | 1.01 | 1.01 | 1.01 |
| Water Vapor Transmission Rate | F-1249 | g/m²/ 24 hrs. | 47.4 | 25.2 | 12.5 |
| Light Transmission | D-1003 | % | 93 | 93 | 93 |
| Haze | D-1003 | % | 1.5 | 1.5 | 2.2 |
| Yield | N/A | m²/kg | 39 | 19.5 | 9.7 |

| **Physical Properties of the Layers of the Film** | **Test Method (ASTM)** | **Units** | **Example 12: Styrene Butadiene Copolymer First/Third Layers** | **Example 13: Cyclic Olefin Copolymer Second Layer** | |
|---|---|---|---|---|---|
| Thickness | N/A | µM | 279.4 | 279.4 | |
| Density | N/A | g/cm³ | 1.01 | 1.01 | |
| Water Vapor Transmission Rate | F-1249 | g/m²/24 hrs. | -20 | 0.26 | |
| Light Transmission | D-1003 | % | 92 | ∼92 | |
| Haze | D-1003 | % | 2.9 | ∼0.4 | |
| Yield | N/A | m²/kg | 3.5 | 3.5 | |

### Comparative Film Performance Examples 14 - 16:

The physical properties of comparative films including polymers formed from halogenated molecules are determined by ASTM test methods. These physical properties also include Water Vapor Transmission Rate, Light Transmission, Haze, and Peel Strength, and they are set forth in Table 5.

Comparative Film Performance Example 14 Film formed from halogenated molecules, and it contains a single layer including polyvinyl chloride, commercially available from Klöckner Pentaplast of America, Inc. of Gordonsville, VA, under the trade name of Pentapharm^{®}. The film is manufactured by a calendaring process.

Comparative Film Performance Example 15 Film is also a film formed from halogenated molecules, and it contains three layers including polyvinylidene chloride coated onto polyethylene, which, in turn, is laminated onto polyvinyl chloride. The polyvinylidene chloride is commercially available from The Dow Chemical Company of Midland, MI, under the trade name of Saran^{®}. The polyvinyl chloride is commercially available from Klöckner Pentaplast of America, Inc. of Gordonsville, VA, under the trade name of Pentapharm^{®}.

Comparative Film Performance Example 16 Film is also a film formed from halogenated molecules, and it contains two layers including polychlorotrifluoroethylene laminated onto polyvinylchloride. The polychlorotrifluoroethylene is commercially available from Honeywell International Inc. of Morristown, NJ, under the trade name of ACLAR^{®}Rx 160. Comparative Film Performance Example 16 Film is formed by an adhesive lamination process well known in the art.

**Table 5**

| **Physical Properties of the Film** | **Test Method (ASTM)** | **Units** | **Comparative Example 14 Film** | **Comparative Example 15 Film** | **Comparative Example 16 Film** |
|---|---|---|---|---|---|
| Thickness | N/A | µm | ∼280 | ∼302.2 | ∼264.2 |
| Density | N/A | g/cm³ | 1.38 | N/A | N/A |
| Water Vapor Transmission Rate | F-1249 | g/m²/24 hrs. | 2.85 | 0.30 | 0.39 |
| Light Transmission | D-1003 | % | 93 | ∼90 | ∼90 |
| Haze | D-1003 | % | 1.2 | N/A | N/A |
| Peel Strength | D-903 | kg/m (lbs_{f}/in.) | > 26,8 (> 1.5) | > 26,8 (> 1.5) | > 26,8 (> 1.5) |
| Yield | N/A | m²/kg | ∼2.87 | ∼2.17 | ∼2.5 |

Yield is an amount of film area available per 1 kilogram of material.

Upon testing, it is determined that the water vapor transmission rate of the film (20) of the present invention is lower than the water vapor transmission rate of the film of Comparative Polymer Example 14 Film and comparable to the water vapor transmission rate of the films of Comparative Polymer Example Films 14 and 15 which include halogens such as chlorine and fluorine. It is also determined that the light transmission of the film **(20)** of the present invention is comparable to the light transmission of the films of Comparative Film Performance Example Films 14, 15, and 16.

While the invention has been described in connection with numerous examples and illustrative packaging" modifications to the examples and additional applications of the invention will be readily apparent to those of skill in the art. For example, while structures having relatively thick layers of cyclo-olefin copolymers have been illustrated, structures having a relatively thin cyclo-olefin copolymer layer such as 125µm SCB/25 or 50 µm COP/125µm SBC film structure are suitable in many cases. Likewise, while the structures illustrated herewith are generally symmetric, unsymmetric structures, i.e., thin layer/thick layer/thick layer structures are also contemplated within the scope of the present invention. Moreover, the invention is by no means restricted to thin film structures. Relatively thick SBC/COP composites of 1200 µm (1200 microns) overall thickness, 1500 µm (1500 microns) overall thickness and more are specifically contemplated to be within the scope of the present invention. In view of the foregoing discussion, relevant knowledge in the art and references discussed above in connection with the Background and Detailed Description, further description is deemed unnecessary.

## Claims

1. A film, **characterized in that** said film comprises:
a first layer comprising styrene butadiene copolymer;
a second layer comprising a cyclic olefin and disposed on said first layer; and
a third layer comprising styrene butadiene copolymer and disposed on said second layer as an outermost layer of said film,
wherein said first and third layers have less than 10,000 parts of cyclic olefin per one million parts of the corresponding layer and said second layer has less than 10,000 parts of styrene butadiene copolymer per one million parts of the second layer.

2. A film as set forth in Claim 1, **characterized in that** said film has less than 5,000 parts of halogens per one million parts of the film.

3. A film as set forth in Claim 1, **characterized in that** said first, second, and third layers are extruded simultaneously.

4. A film as set forth in Claim 1, **characterized in that** said second layer is disposed in contact with said first layer.

5. A film as set forth in Claim 4, **characterized in that** said third layer is disposed in contact with said second layer.

6. A film as set forth in Claim 1, **characterized in that** said third layer is disposed in contact with said second layer.

7. A film as set forth in Claim 1, **characterized in that** the film further comprises an intermediate layer disposed between said first and second layers.

8. A film as set forth in Claim 7, **characterized in that** the film further comprises a second intermediate layer disposed between said second and third layers, wherein said second intermediate layer is the same as said intermediate layer.

9. A film as set forth in Claim 1, **characterized in that** the film further comprises an intermediate layer disposed between said second and third layers.

10. A film as set forth in Claim 1, **characterized in that** said styrene butadiene copolymer comprises the reaction product of:
a styrene monomer; and
1,3-butadiene.

11. A film as set forth in Claim 1, **characterized in that** said cyclic olefin comprises the general structure: 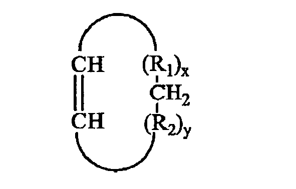 wherein each of R₁ and R₂ independently comprise one of a hydrogen and a hydrocarbon; and
wherein x and y independently comprise an integer less than or equal to 10.

12. A film as set forth in Claim 1, **characterized in that** said cyclic olefin is selected from one of the general structures: 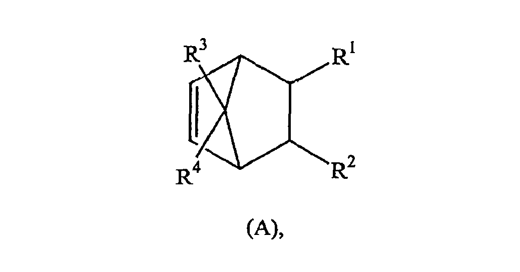 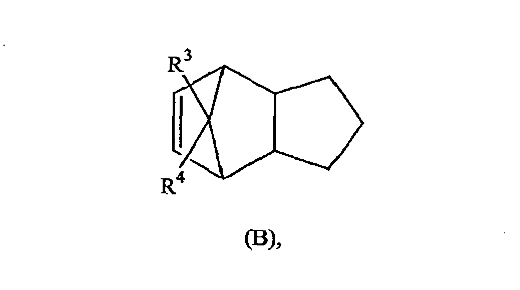 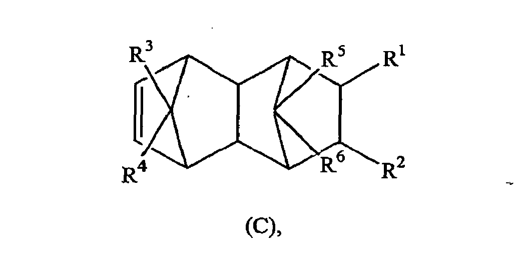 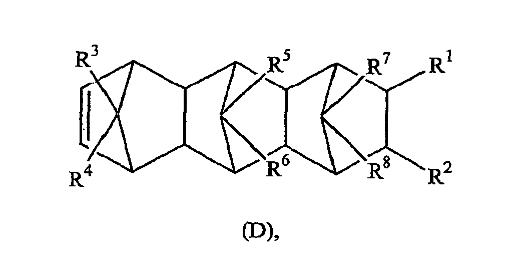 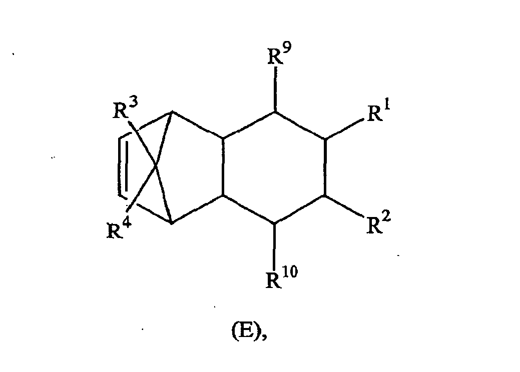 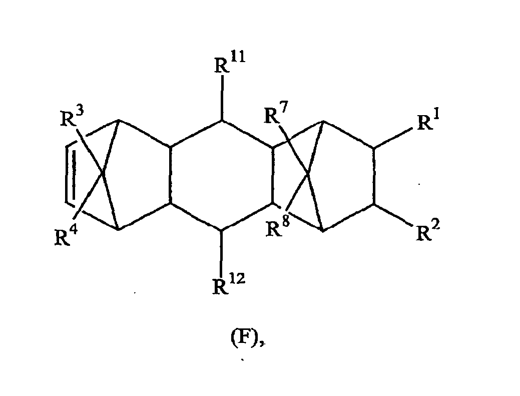 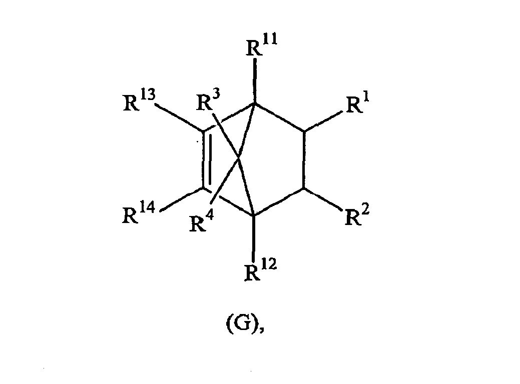 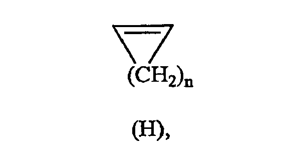 wherein each of R¹ through R¹⁴ independently include one of an aryl group, and alkyl group, a halogen, and a hydrogen; and
wherein n includes an integer less than or equal to 10.

13. A film as set forth in Claim 12, **characterized in that** said cyclic olefin comprises norbornene.

14. A film as set forth in Claim 1, **characterized in that** said cyclic olefin comprises at least one pendant organic group.

15. A film as set forth in Claim 1, **characterized in that** said cyclic olefin comprises a cyclic olefin copolymer.

16. A film as set forth in Claim 15, **characterized in that** said cyclic olefin copolymer comprises the interaction product of:
said cyclic olefin; and
a cross-linker.

17. A film as set forth in Claim 16, **characterized in that** said cross-linker is selected from the group of alkanes, alkenes, alkynes, and combinations thereof.

18. A film as set forth in Claim 15, **characterized in that** said cyclic olefm copolymer comprises the general structure: 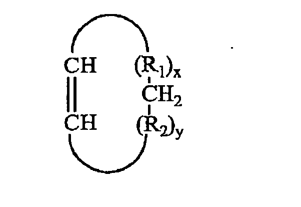 wherein each of R₁ and R₂ independently comprise one of a hydrogen and a hydrocarbon; and
wherein x and y independently comprise an integer less than or equal to 10.

19. A film as set forth in Claim 15, **characterized in that** said cyclic olefin copolymer comprises norbornene.

20. A film as set forth in Claim 15, **characterized in that** said cyclic olefin copolymer comprises at least one pendant organic group.

21. A film as set forth in Claim 1, **characterized in that** said film has a density of from 0.98 to 1.03 g/cm³.

22. A film as set forth in Claim 1, **characterized in that** said film has a peel strength of greater than 17.86 kg/m (1.0 lbs_{f}/in). as determined by ASTM D-903.

23. A film as set forth in Claim 1 **characterized in that** the film having a water vapor transmission rate of from 0.20 to 3.00 g/m²/ 24 hrs. as determined by ASTM F-1249.

24. A film as set forth in Claim 1 **characterized in that** the film having a light transmission of from 88 to 93 percent as determined by ASTM D-1003.

25. A film as set forth in Claim 1 **characterized in that** the film having a haze of from 2 to 6 percent as determined by ASTM D-1003.

26. A film as set forth in Claim 1, **characterized in that** said first layer has a thickness of from 25µm to 205µm.

27. A film as set forth in Claim 1, **characterized in that** said second layer has a thickness of from 75µm to 205µm.

28. A film as set forth in Claim 1, **characterized in that** said third layer has a thickness of from 25µm to 205µm.

29. A pharmaceutical package comprising:
a base layer;
a sealant layer disposed on said base layer; and
a blister disposed on said sealant layer and formed from a film
**characterized in that** said film comprises;
a first layer comprising styrene butadiene copolymer;
a second layer comprising a cyclic olefin and disposed on said first layer; and
a third layer comprising styrene butadiene copolymer and disposed on said second layer as an outermost layer of said film,
wherein said first layer and third layer have less than 10,000 parts of cyclic olefin per one million parts of the corresponding layer and said second layer has less than 10,000 parts of styrene butadiene copolymer per one million parts of the second layer.

30. A pharmaceutical package as set forth in Claim 29, **characterized in that** the package further comprises a pharmaceutical product disposed within said blister.

31. A pharmaceutical package as set forth in Claim 29, **characterized in that** said sealant layer is disposed in contact with said base layer.

32. A pharmaceutical package as set forth in Claim 31, **characterized in that** said blister is disposed in contact with said sealant layer.

33. A pharmaceutical package as set forth in Claim 29 **characterized in that** said blister is disposed in contact with said sealant layer.

34. A pharmaceutical package as set forth in Claim 29, **characterized in that** said base layer comprises aluminum.

35. A pharmaceutical package as set forth in Claim 29, **characterized in that** the package further comprises a lacquer layer disposed on said base layer and sandwiching said base layer between said lacquer layer and said sealant layer.

36. A pharmaceutical package as set forth in Claim 35, **characterized in that** the package further comprises an interior layer disposed between said lacquer layer and said base layer.

37. A pharmaceutical package as set forth in Claim 29, **characterized in that** the package further comprises an interior layer disposed between said base layer and said sealant layer.

38. A pharmaceutical package as set forth in Claim 29, **characterized in that** the package further comprises an interior layer disposed between said sealant layer and said blister.

39. A pharmaceutical package as set forth in Claim 29, **characterized in that** said film has a water vapor transmission rate of from 0.20 to 3.00 g/m²/ 24 hrs. as determined by ASTM F-1249.

40. A pharmaceutical package as set forth in Claim 29, **characterized in that** said film has a light transmission of from 88 to 93 percent as determined by ASTM D-1003.

41. A pharmaceutical package as set forth in Claim 29, **characterized in that** said film has a haze of from 2 to 6 percent as determined by ASTM D-1003.

42. A method of making a film, **characterized in that** said method comprising the steps of:
a) forming a first layer comprising styrene butadiene copolymer;
b) forming a second layer comprising a cyclic olefin on the first layer; and
c) forming a third layer comprising styrene butadiene copolymer on the second layer as an outermost layer of the film,
wherein the first and third layers have less than 10,000 parts of the cyclic olefin per one million parts of the corresponding layer and the second layer has less than 10,000 parts of styrene butadiene copolymer per one million parts of the second layer.

43. A method as set forth in Claim 42, **characterized in that** the step of forming the first layer comprises extruding the first layer, the step of forming the second layer comprises extruding the second layer, and the step of forming the third layer comprises extruding the third layer.

44. A method as set forth in Claim 43, **characterized in that** the first, second, and third layers are simultaneously extruded.

45. A method as set forth in Claim 42, **characterized in that** the method further comprises the step of melt-bonding the first, second, and third layers.

46. A method as set forth in Claim 42, **characterized in that** the film has less than 5,000 parts of halogens per one million parts of the film.

47. A method as set forth in Claim 42, **characterized in that** the second layer is formed in contact with the first layer.

48. A method as set forth in Claim 47, **characterized in that** the third layer is formed in contact with the second layer.

49. A method as set forth in Claim 42, **characterized in that** the third layer is formed in contact with the second layer.

## Patentansprüche

1. Folie, **dadurch gekennzeichnet, dass** die Folie Folgendes umfasst:
eine erste Schicht, die Styrol-Butadien-Copolymer umfasst;
eine zweite Schicht, die ein cyclisches Olefin umfasst und die auf der ersten Schicht angeordnet ist; und
eine dritte Schicht, die Styrol-Butadien-Copolymer umfasst und die auf der zweiten Schicht als eine äußerste Schicht der Folie angeordnet ist,
wobei die erste und dritte Schicht weniger als 10 000 Teile cyclisches Olefin pro eine Million Teile der entsprechenden Schicht aufweisen und die zweite Schicht weniger als 10 000 Teile Styrol-Butadien-Copolymer pro eine Million Teile der zweiten Schicht aufweist.

2. Folie gemäß Anspruch 1, **dadurch gekennzeichnet, dass** die Folie weniger als 5000 Teile Halogene pro eine Million Teile der Folie aufweist.

3. Folie gemäß Anspruch 1, **dadurch gekennzeichnet, dass** die erste, zweite und dritte Schicht gleichzeitig extrudiert werden.

4. Folie gemäß Anspruch 1, **dadurch gekennzeichnet, dass** die zweite Schicht in Kontakt mit der ersten Schicht angeordnet ist.

5. Folie gemäß Anspruch 4, **dadurch gekennzeichnet, dass** die dritte Schicht in Kontakt mit der zweiten Schicht angeordnet ist.

6. Folie gemäß Anspruch 1, **dadurch gekennzeichnet, dass** die dritte Schicht in Kontakt mit der zweiten Schicht angeordnet ist.

7. Folie gemäß Anspruch 1, **dadurch gekennzeichnet, dass** die Folie weiterhin eine zwischen der ersten und zweiten Schicht angeordnete Zwischenschicht umfasst.

8. Folie gemäß Anspruch 7, **dadurch gekennzeichnet, dass** die Folie weiterhin eine zweite Zwischenschicht, die zwischen der zweiten und dritten Schicht angeordnet ist, umfasst; wobei die zweite Zwischenschicht die gleiche wie die Zwischenschicht ist.

9. Folie gemäß Anspruch 1, **dadurch gekennzeichnet, dass** die Folie weiterhin eine zwischen der zweiten und dritten Schicht angeordnete Zwischenschicht umfasst.

10. Folie gemäß Anspruch 1, **dadurch gekennzeichnet, dass** das Styrol-Butadien-Copolymer das Reaktionsprodukt von:
einem Styrolmonomer; und
1,3-Butadien
umfasst.

11. Folie gemäß Anspruch 1, **dadurch gekennzeichnet, dass** das cyclische Olefin die folgende allgemeine Struktur: 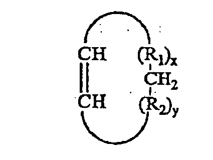 aufweist, wobei jedes von R₁ und R₂ unabhängig eines aus einem Wasserstoff und einem Kohlenwasserstoff umfasst; und
wobei x und y unabhängig eine ganze Zahl von kleiner oder gleich 10 umfassen.

12. Folie gemäß Anspruch 1, **dadurch gekennzeichnet, dass** das cyclische Olefin aus einer der folgenden allgemeinen Strukturen gewählt ist: 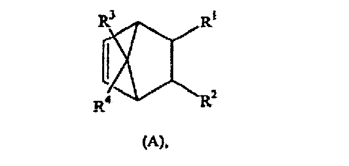 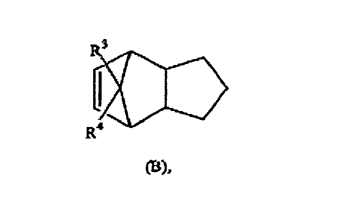 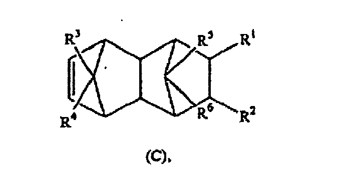 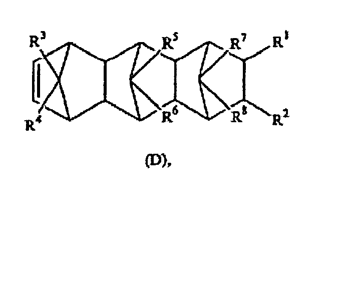 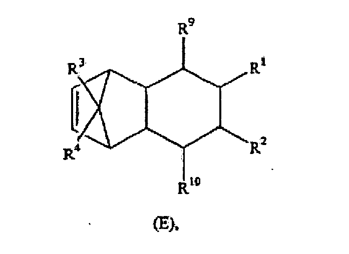 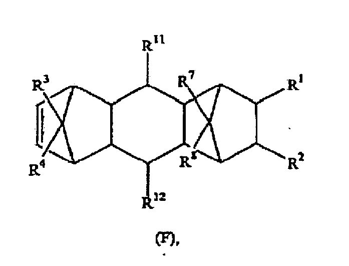 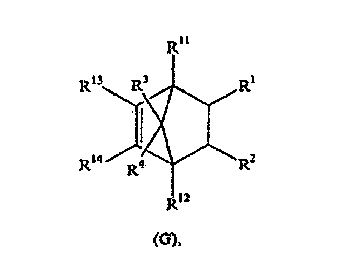 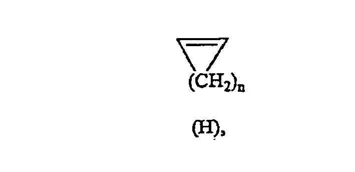 worin jedes von R¹ bis R¹⁴ unabhängig eines aus einer Arylgruppe und Alkylgruppe, einem Halogen und einem Wasserstoff einschließt; und
worin n eine ganze Zahl von kleiner als oder gleich 10 einschließt.

13. Folie gemäß Anspruch 12, **dadurch gekennzeichnet, dass** das cyclische Olefin Norbornen umfasst.

14. Folie gemäß Anspruch 1, **dadurch gekennzeichnet, dass** das cyclische Olefin mindestens eine anhängige organische Gruppe umfasst.

15. Folie gemäß Anspruch 1, **dadurch gekennzeichnet, dass** das cyclische Olefin ein cyclisches Olefincopolymer umfasst.

16. Folie gemäß Anspruch 15, **dadurch gekennzeichnet, dass** das cyclische Olefincopolymer das Wechselwirkungsprodukt von:
dem cyclischen Olefin; und
einem Vernetzungsmittel
umfasst.

17. Folie gemäß Anspruch 16, **dadurch gekennzeichnet, dass** das Vernetzungsmittel aus der Gruppe von Alkanen, Alkenen, Alkinen und Kombinationen davon gewählt wird.

18. Folie gemäß Anspruch 15, **dadurch gekennzeichnet, dass** das cyclische Olefincopolymer die folgende allgemeine Struktur: 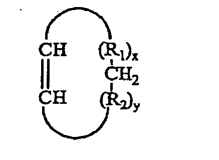 aufweist, worin jedes von R₁ und R₂ unabhängig eines aus einem Wasserstoff und einem Kohlenwasserstoff umfasst; und
worin x und y unabhängig eine ganze Zahl von kleiner oder gleich 10 umfassen.

19. Folie gemäß Anspruch 15, **dadurch gekennzeichnet, dass** das cyclische Olefincopolymer Norbornen umfasst.

20. Folie gemäß Anspruch 15, **dadurch gekennzeichnet, dass** das cyclische Olefincopolymer mindestens eine anhängige organische Gruppe umfasst.

21. Folie gemäß Anspruch 1, **dadurch gekennzeichnet, dass** die Folie eine Dichte von 0,98 bis 1,03 g/cm³ aufweist.

22. Folie gemäß Anspruch 1, **dadurch gekennzeichnet, dass** die Folie eine Ablösefestigkeit von mehr als 17,86 kg/m (1,0 lbs/in), wie durch ASTM D-903 bestimmt, aufweist.

23. Folie gemäß Anspruch 1, **dadurch gekennzeichnet, dass** die Folie eine Wasserdampfdurchlassrate von 0,20 bis 3,00 g/m²/24 h, wie durch ASTM F-1249 bestimmt, aufweist.

24. Folie gemäß Anspruch 1, **dadurch gekennzeichnet, dass** die Folie eine Lichtdurchlässigkeit von 88 bis 93 Prozent, wie durch ASTM D-1003 bestimmt, aufweist.

25. Folie gemäß Anspruch 1, **dadurch gekennzeichnet, dass** die Folie eine Trübung von 2 bis 6 Prozent, wie durch ASTM D-1003 bestimmt, aufweist.

26. Folie gemäß Anspruch 1, **dadurch gekennzeichnet, dass** die erste Schicht eine Dicke von 25 µm bis 205 µm aufweist.

27. Folie gemäß Anspruch 1, **dadurch gekennzeichnet, dass** die zweite Schicht eine Dicke von 75 µm bis 205 µm aufweist.

28. Folie gemäß Anspruch 1, **dadurch gekennzeichnet, dass** die dritte Schicht eine Dicke von 25 µm bis 205 µm aufweist.

29. Pharmazeutische Packung, umfassend:
eine Basisschicht;
eine auf der Basisschicht vorgesehene Versiegelungsschicht; und
einen Blister, der auf der Versiegelungsschicht vorgesehen ist und aus einer Folie gebildet ist,
**dadurch gekennzeichnet, dass** die Folie Folgendes umfasst:
eine erste Schicht, die Styrol-Butadien-Copolymer umfasst;
eine zweite Schicht, die ein cyclisches Olefin umfasst und die auf der ersten Schicht angeordnet ist; und
eine dritte Schicht, die Styrol-Butadien-Copolymer umfasst und die auf der zweiten Schicht als eine äußerste Schicht der Folie angeordnet ist,
wobei die erste Schicht und die dritte Schicht weniger als 10 000 Teile cyclisches Olefin pro eine Million Teile der entsprechenden Schicht aufweist und die zweite Schicht weniger als 10 000 Teile Styrol-Butadien-Copolymer pro eine Million Teile der zweiten Schicht aufweist.

30. Pharmazeutische Packung gemäß Anspruch 29, **dadurch gekennzeichnet, dass** die Packung weiterhin ein innerhalb des Blisters angeordnetes pharmazeutisches Produkt umfasst.

31. Pharmazeutische Packung gemäß Anspruch 29, **dadurch gekennzeichnet, dass** die Versiegelungsschicht in Kontakt mit der Basisschicht angeordnet ist.

32. Pharmazeutische Packung gemäß Anspruch 31, **dadurch gekennzeichnet, dass** der Blister in Kontakt mit der Versiegelungsschicht angeordnet ist.

33. Pharmazeutische Packung gemäß Anspruch 29, **dadurch gekennzeichnet, dass** der Blister in Kontakt mit der Versiegelungsschicht angeordnet ist.

34. Pharmazeutische Packung gemäß Anspruch 29, **dadurch gekennzeichnet, dass** die Basisschicht Aluminium umfasst.

35. Pharmazeutische Packung gemäß Anspruch 29, **dadurch gekennzeichnet, dass** die Packung weiterhin eine Lackschicht umfasst, die auf der Basisschicht angeordnet ist und wobei die Basisschicht sandwichartig zwischen der Lackschicht und der Versiegelungsschicht eingebettet ist.

36. Pharmazeutische Packung gemäß Anspruch 35, **dadurch gekennzeichnet, dass** die Packung weiterhin eine zwischen der Lackschicht und der Basisschicht angeordnete Innenschicht umfasst.

37. Pharmazeutische Packung gemäß Anspruch 29, **dadurch gekennzeichnet, dass** die Packung weiterhin eine zwischen der Basisschicht und der Versiegelungsschicht angeordnete Innenschicht umfasst.

38. Pharmazeutische Packung gemäß Anspruch 29, **dadurch gekennzeichnet, dass** die Packung weiterhin eine zwischen der Versiegelungsschicht und dem Blister angeordnete Innenschicht umfasst.

39. Pharmazeutische Packung gemäß Anspruch 29, **dadurch gekennzeichnet, dass** die Folie eine Wasserdampfdurchlassrate von 0,20 bis 3,00 g/m²/24 h, wie durch ASTM F-1249 bestimmt, aufweist.

40. Pharmazeutische Packung gemäß Anspruch 29, **dadurch gekennzeichnet, dass** die Folie eine Lichtdurchlässigkeit von 88 bis 93 Prozent, wie durch ASTM D-1003 bestimmt, aufweist.

41. Folie gemäß Anspruch 29, **dadurch gekennzeichnet, dass** die Folie eine Trübung von 2 bis 6 Prozent, wie durch ASTM D-1003 bestimmt, aufweist.

42. Verfahren zur Herstellung einer Folie, **dadurch gekennzeichnet, dass** das Verfahren die folgenden Schritte umfasst:
a) Bilden einer ersten Schicht, welche Styrol-Butadien-Copolymer umfasst;
b) Bilden einer zweiten Schicht, welche ein cyclisches Olefin umfasst, auf der ersten Schicht; und
c) Bilden einer dritten Schicht, welche Styrol-Butadien-Copolymer umfasst, auf der zweiten Schicht als einer äußersten Schicht der Folie,
wobei die erste und dritte Schicht weniger als 10 000 Teile des cyclischen Olefins pro eine Million Teile der entsprechenden Schicht aufweisen und die zweite Schicht weniger als 10 000 Teile Styrol-Butadien-Copolymer pro eine Million Teile der zweiten Schicht aufweist.

43. Folie gemäß Anspruch 42, **dadurch gekennzeichnet, dass** der Schritt des Bildens der ersten Schicht das Extrudieren der ersten Schicht umfasst, der Schritt des Bildens der zweiten Schicht das Extrudieren der zweiten Schicht umfasst und der Schritt des Bildens der dritten Schicht das Extrudieren der dritten Schicht umfasst.

44. Folie gemäß Anspruch 43, **dadurch gekennzeichnet, dass** die erste, zweite und dritte Schicht gleichzeitig extrudiert werden.

45. Folie gemäß Anspruch 42, **dadurch gekennzeichnet, dass** das Verfahren weiterhin den Schritt des Schmelzverklebens der ersten, zweiten und dritten Schicht umfasst.

46. Folie gemäß Anspruch 42, **dadurch gekennzeichnet, dass** die Folie weniger als 5000 Teile Halogene pro eine Million Teile der Folie aufweist.

47. Folie gemäß Anspruch 42, **dadurch gekennzeichnet, dass** die zweite Schicht in Kontakt mit der ersten Schicht gebildet wird.

48. Folie gemäß Anspruch 47, **dadurch gekennzeichnet, dass** die dritte Schicht in Kontakt mit der zweiten Schicht gebildet wird.

49. Folie gemäß Anspruch 42, **dadurch gekennzeichnet, dass** die dritte Schicht in Kontakt mit der zweiten Schicht gebildet wird.

## Revendications

1. Un film, **caractérisé en ce qu'**il comprend:
- une première couche comprenant un copolymère styrène butadiène;
- une deuxième couche, comprenant une oléfine cyclique, disposée sur cette première couche; et
- une troisième couche, comprenant un copolymère styrène butadiène, disposée sur cette seconde couche et formant ainsi la couche externe de ce film,
dans lequel ces première et troisième couches contiennent moins de 10.000 parties d'oléfines cycliques par million de parties de la couche correspondante et la deuxième couche contient moins de 10.000 parties d'un copolymère styrène butadiène par million de parties de la deuxième couche.

2. Un film tel que défini dans la revendication 1, ce film étant **caractérisé en ce qu'**il contient moins de 5.000 parties d'halogènes par million de parties de film.

3. Un film tel que défini dans la revendication 1, **caractérisé en ce que** ces première, deuxième et troisième couches sont extrudées simultanément.

4. Un film tel que défini dans la revendication 1, **caractérisé en ce que** cette deuxième couche est disposée au contact de cette première couche.

5. Un film tel que défini dans la revendication 4, **caractérisé en ce que** cette troisième couche est disposée au contact de cette deuxième couche.

6. Un film tel que défini dans la revendication 1, **caractérisé en ce que** cette troisième couche est disposée au contact de cette deuxième couche.

7. Un film tel que défini dans la revendication 1, **caractérisé en ce que** le film comprend en outre une couche intermédiaire disposée entre ces première et deuxième couches.

8. Un film tel que défini dans la revendication 7, **caractérisé en ce qu'**il comprend en outre une deuxième couche intermédiaire disposée entre ces deuxième et troisième couches, cette deuxième couche intermédiaire étant identique à cette couche intermédiaire.

9. Un film tel que défini dans la revendication 1, **caractérisé en ce qu'**il comprend en outre une couche intermédiaire disposée entre ces deuxième et troisième couches.

10. Un film tel que défini dans la revendication. 1, **caractérisé en ce que** ce ledit copolymère styrène butadiène comprend le produit de la réaction d'un monomère styrénique et du 1,3-butadiène.

11. Un film tel que défini dans la revendication 1, **caractérisé en ce que** cette oléfine cyclique comprend la structure générale: 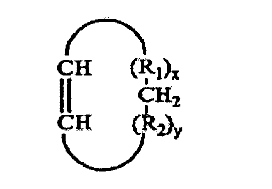 dans laquelle chaque groupe R₁ et R₂, indépendamment l'un de l'autre, consiste soit en un atome d'hydrogène soit en un hydrocarbure; et dans laquelle x et y, sont, indépendamment l'un de l'autre, un nombre entier inférieur ou égal à 10.

12. Un film tel que défini dans la revendication 1, **caractérisé en ce que** cette oléfine cyclique est choisie parmi celles présentant la structure générale: 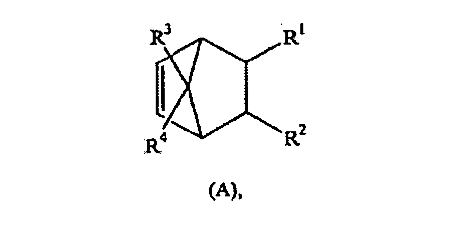 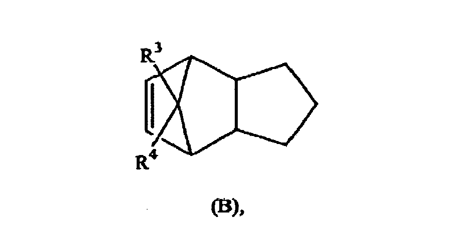 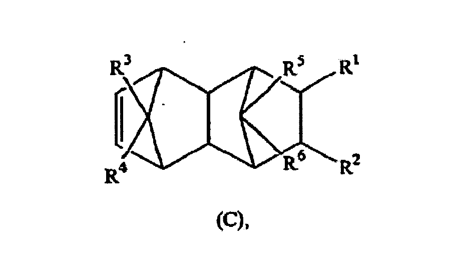 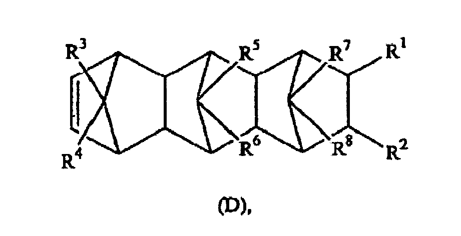 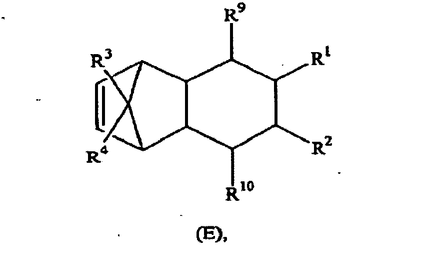 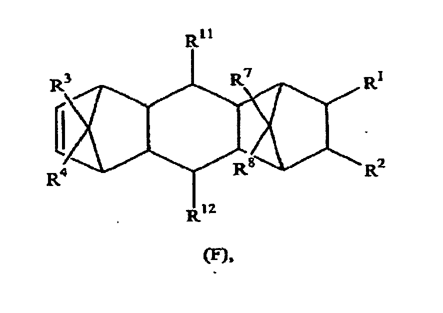 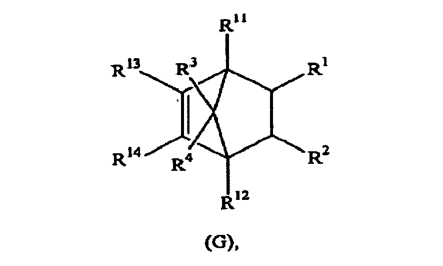 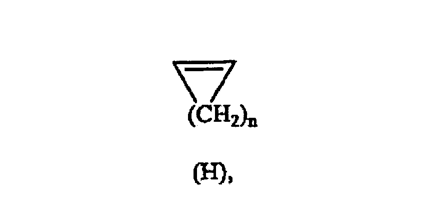 dans laquelle chacun des groupes R¹ à R¹⁴, indépendamment l'un de l'autre, comprend un des radicaux aryl et alkyl, un halogène et un atome d'hydrogène et dans laquelle n correspond à un nombre entier inférieur ou égal à 10.

13. Un film tel que défini dans la revendication 12, **caractérisé en ce que** cette oléfine cyclique comprend du norbomène.

14. Un film tel que défini dans la revendication 1, **caractérisé en ce que** cette oléfine cyclique comprend au moins un radical organique pendant.

15. Un film tel que défini dans la revendication 1, **caractérisé en ce que** cette oléfine cyclique comprend un copolymère d'oléfine cyclique.

16. Un film tel que défini dans la revendication 15, **caractérisé en ce que** ce copolymère d'oléfine cyclique comprend le produit de l'interaction de ladite oléfine cyclique et un agent de réticulation.

17. Un film tel que défini dans la revendication 16, **caractérisé en ce que** l'agent de réticulation est choisi dans le groupe des alkanes, alkènes, alkynes et leurs combinaisons.

18. Un film tel que défini dans la revendication 15, **caractérisé en ce que** ce copolymère d'oléfine cyclique comprend la structure générale: 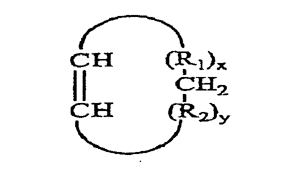 dans laquelle chacun des groupes R¹ et R², indépendamment l'un de l'autre, consiste en un atome d'hydrogène et un hydrocarbure; et dans laquelle x et y, sont, indépendamment l'un de l'autre, un nombre entier inférieur ou égal à 10.

19. Un film tel que défini dans la revendication 15, **caractérisé en ce que** ce copolymère d'oléfine cyclique comprend du norbomène.

20. Un film tel que défini dans la revendication 15, **caractérisé en ce que** ce copolymère d'oléfine cyclique comprend au moins un groupe organique pendant.

21. Un film tel que défini dans la revendication 1, **caractérisé en ce que** ce film présente une densité comprise entre 0,98 et 1,03 g/cm³.

22. Un film tel que défini dans la revendication 1, ce film étant **caractérisé en ce qu'**il présente une résistance au pelage, déterminée par la norme ASTM D-903, supérieure à 17,86 kg/m (1.0 lbs/in).

23. Un film tel que défini dans la revendication 1, ce film étant **caractérisé en ce qu'**il présente un taux de transmission de la vapeur d'eau, déterminé par la norme ASTM F-1249, compris entre 0,20 et 3,00 g/m²/24 hrs.

24. Un film tel que défini dans la revendication 1, ce film étant **caractérisé en ce qu'**il présente un taux de transmission lumineuse, déterminé par la norme ASTM D-1003, compris entre 88 et 93 pourcents.

25. Un film tel que défini dans la revendication 1, **caractérisé en ce que** le film présente un trouble, déterminé par la norme USTM D-1 003, compris entre 2% et 6%.

26. Un film tel que défini dans la revendication 1, **caractérisé en ce que** la première couche présente une épaisseur comprise entre 25µm et 205µm.

27. Un film tel que défini dans la revendication 1, **caractérisé en ce que** la deuxième couche présente une épaisseur comprise entre 75µm et 205µm.

28. Un film tel que défini dans la revendication 1, **caractérisé en ce que** ce troisième couche présente une épaisseur comprise entre 25µm et 205µm.

29. Un emballage pharmaceutique comprenant:
- une couche de base
- une couche de scellement disposée sur cette couche de base; et
- un blister disposé sur cette couche de scellement et formée depuis un film
**caractérisé en ce que** ce film comprend;
- une première couche comprenant un copolymère styrène butadiène;
- une deuxième couche comprenant une oléfine cyclique, disposée sur cette première couche; et
- une troisième couche comprenant un copolymère styrène butadiène, disposée sur cette deuxième couche et qui forme la couche externe de ce film,
et **en ce que** cette première couche et troisième couche contiennent moins de. 10.000 parties d'oléfines cycliques par million de parties de la couche correspondante et cette deuxième couche comporte moins de 10.000 parties d'un copolymère styrène butadiène par million de parties de la deuxième couche.

30. Un emballage pharmaceutique tel que défini dans la revendication 29, **caractérisé en ce que** l'emballage comprend en outre un produit pharmaceutique disposé dans ledit blister.

31. Un emballage pharmaceutique tel que défini dans la revendication 29, **caractérisé en ce que** cette couche de scellement est disposée au contact de cette couche de base.

32. Un emballage pharmaceutique tel que défini dans la revendication 31, **caractérisé en ce que** ce blister est disposé au contact de cette couche de scellement.

33. Un emballage pharmaceutique tel que défini dans la revendication 29 **caractérisé en ce que** ce blister est disposé au contact de ladite couche de scellement.

34. Un emballage pharmaceutique tel que défini dans la revendication 29, **caractérisé en ce que** cette couche de base comprend de l'aluminium.

35. Un emballage pharmaceutique tel que défini dans la revendication 29, **caractérisé en ce que** l'emballage comprend en outre une couche de laque disposée sur la couche de base, la couche de laque et la couche de scellement formant un sandwich autour de ladite couche de base.

36. Un emballage pharmaceutique tel que défini dans la revendication 35, **caractérisé en ce que** cet emballage comprend en outre une couche interne disposée entre la couche de laque et la couche de base.

37. Un emballage pharmaceutique tel que défini dans la revendication 29, **caractérisé en ce que** l'emballage comprend en outre une couche interne disposée entre la couche de base et la couche de scellement.

38. Un emballage pharmaceutique tel que défini dans la revendication 29, **caractérisé en ce que** l'emballage comprend en outre une couche interne disposée entre la couche de scellement et le blister.

39. Un emballage pharmaceutique tel que défini dans la revendication 29, **caractérisé en ce que** ce film présente un taux de transmission de vapeur d'eau, tel que déterminé par la norme USTM F-1249, compris entre 0,20 et 3,00 g/m²/24hrs.

40. Un emballage pharmaceutique tel que défini dans la revendication 29, **caractérisé en ce que** ce film donne lieu à une transmission de lumière, déterminée par la norme USTM D-1003, comprise entre 88 et 93%.

41. Un emballage pharmaceutique tel que défini dans la revendication 29, **caractérisé en ce que** ce film présente un trouble, déterminé par la norme USTM D-1 003, compris entre 2% et 6%.

42. Un procédé de fabrication d'un film. ce procédé étant **caractérisé, en ce qu'**il comprend les étapes de:
a) formation d'une première couche comprenant un copolymère styrène butadiène,
b) formation d'une deuxième couche comprenant une oléfine cyclique sur la première couche;
et
c) formation d'une troisième couche comprenant un copolymère styrène butadiène sur la deuxième couche, consistant en la couche externe du film,
dans lequel les premières et troisième couches contiennent moins de 10.000 parties de l'oléfine cyclique par million de parties de la couche correspondante et la deuxième couche contient moins de 10.000 parties d'un copolymère styrène butadiène par million de parties de la deuxième couche.

43. Un procédé tel que défini dans la revendication 42, **caractérisé en ce que** l'étape de formation de la première couche comprend l'extrusion de la première couche, l'étape de formation de la deuxième couche comprend l'extrusion de la deuxième couche, et l'étape de formation de la troisième couche comprend l'extrusion de la troisième couche.

44. Un procédé tel que défini dans la revendication 43, **caractérisé en ce que** les première, deuxième, et troisième couches sont étendues simultanément.

45. Un procédé tel que défini dans la revendication 42, ce procédé étant **caractérisé en ce qu'**il comprend en outre l'étape de liaison par fusion des première, deuxième et troisième couches.

46. Un procédé tel que défini dans la revendication 42, **caractérisé en ce que** le film contient moins de 5.000 parties d'halogènes par million de parties de film.

47. Un procédé tel que défini dans la revendication 42, **caractérisé en ce que** la deuxième couche est formée au contact avec la première couche.

48. Un procédé tel que défini dans la revendication 47, **caractérisé en ce que** la troisième couche est formée au contact avec la deuxième couche.

49. Un procédé tel que défini dans la revendication. 42, **caractérisé en ce que** la troisième couche est formée au contact avec la deuxième couche.
